Europäisches Patentamt

European Patent Office

Office européen des brevets

(11) Publication number: **0 339 805 B1**

# EUROPEAN PATENT SPECIFICATION

(45) Date of publication of patent specification: **15.12.93**  (51) Int. Cl.5: **F16F  15/16,** F16F 15/12

(21) Application number: **89303236.7**

(22) Date of filing: **31.03.89**

(54) **Torsional damper type flywheel device with a damping mechanism utilizing a fluid flow.**

(30) Priority: **01.04.88 JP 42875/88 U**
**08.04.88 JP 46779/88 U**
**10.05.88 JP 60599/88 U**
**26.10.88 JP 138667/88 U**

(43) Date of publication of application:
**02.11.89 Bulletin  89/44**

(45) Publication of the grant of the patent:
**15.12.93 Bulletin  93/50**

(84) Designated Contracting States:
**DE FR GB**

(56) References cited:
**EP-A- 0 305 189      EP-A- 0 308 178**
**WO-A-88/07147      DE-A- 3 607 240**
**GB-A- 1 066 961      GB-A- 2 163 524**
**GB-A- 2 170 882      US-A- 1 684 568**
**US-A- 4 148 200**

**PATENT ABSTRACTS OF JAPAN, vol. 12, no. 222 (M-712)[3069], 24th June 1988;& JP-A-63 19 440 (MITSUBISHI MOTOR CORP.) 27-01-1988,(Cat. A)**

(73) Proprietor: **TOYOTA JIDOSHA KABUSHIKI KAISHA**
**1, Toyota-cho**
**Toyota-shi**
**Aichi-ken 471(JP)**

(72) Inventor: **Umeyama, Mitsuhiro**
**c/o Toyota Jidosha K.K.**
**1, Toyota-cho**
**Toyota-shi Aichi-ken 471(JP)**

(74) Representative: **Ben-Nathan, Laurence Albert et al**
**Urquhart-Dykes & Lord**
**91 Wimpole Street**
**London W1M 8AH (GB)**

# Description

The present invention relates to torsional damper type flywheel devices having damping mechanisms to suppress resonance.

Flywheel devices which include drive side and driven side flywheels, a single kind of spring mechanism for connecting the drive side and driven side flywheels, and a friction mechanism are known, for example, in U.S. Patent Nos. 4,468,207; 4,274,524; 4,351,168; 2,042,570; 4,445,876; 2,729,079; 2,437,537; 4,663,983; 4,220,233, and 4,002,043; GB-A-2,000,257; DE-A-2,926,012; Automotive Engineering, vol. 93, page 85; Japanese Utility Model Publications SHO 61-23542, SHO 61-23543, SHO 61-23544, SHO 59-113548, SHO 59-108848, SHO 56-6676, and SHO 56-109635; and Japanese Patent Publications SHO 61-59040, SHO 61-59042, and SHO 61-52423.

Any one of the above-described prior art flywheel devices has a single vibrational characteristic defined by the spring mechanism which may include a plurality of coil springs arranged in series with or parallel to each other. Due to the vibrational characteristic, the flywheel device has a single first mode resonance speed throughout the entire range of engine speeds. The single resonance speed is usually set lower than the idling speed of the engine, and when the engine speed passes through the resonance speed during start-up or stopping of the engine, the torsional vibration of the flywheel is amplified. To suppress the amplification, a continuously sliding friction mechanism (often called a hysteresis mechanism) which continuously slides throughout the entire range of engine speeds is usually disposed between the drive side and driven side flywheels.

However, there are two problems with the above-described prior art flywheel devices. One problem is that a considerably large resonance occurs at the resonance speed, in spite of the provision of the friction mechanism, because the characteristic of the flywheel device is determined more by the spring mechanism than by the friction mechanism. The other problem is that the continuously sliding friction mechanism degrades the acceleration transmittance rate (which corresponds to a speed variation or torque variation absorbing effect of the divisional type flywheel device) at the standard range of engine speeds above the idling speed. This is because a temporary sticking often occurs in the friction mechanism and because the frictional force makes the flywheel device operate as if the flywheel device were a non-divisional type device.

European Patent Application EP-A-0 259 173 (No. 87307821.6 filed September 4, 1987) presents a quite different type of flywheel device designed to overcome the problems of the above-described prior art flywheel devices. That flywheel device includes drive side and driven side flywheels, two kinds of spring mechanisms (called a K spring mechanism and a K1 spring mechanism) arranged parallel to each other between the drive side and driven side flywheels, and a momentarily sliding friction mechanism arranged in series with the K1 spring mechanism. The vibrational behavior of that flywheel device can be understood through reference to the Shock and Vibration Hand Book, vol. 2, McGraw Hill, though it does not relate to a flywheel device.

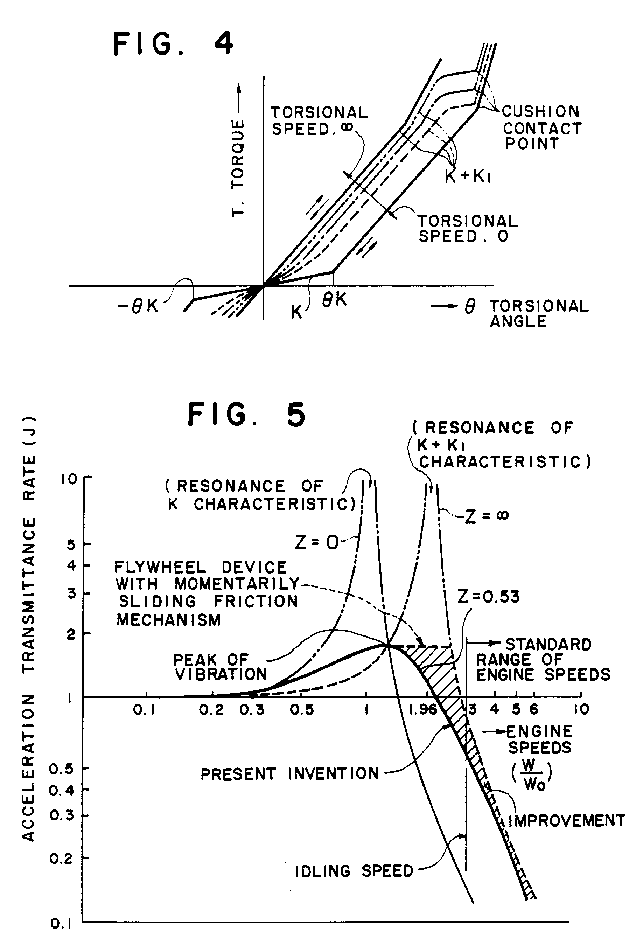

More particularly, that flywheel device has two vibrational characteristics shown by the two-dotted lines in FIG. 5, namely, a K characteristic where only the K spring mechanism operates without being accompanied by the sliding of the friction mechanism and a K + K1 characteristic where both the K and K1 spring mechanisms operate with the sliding of the friction mechanism. In the standard range of engine speeds, the flywheel device operates according to the K + K1 characteristic, because no excessively great torque usually acts at the standard range of engine speeds. Because the friction mechanism does not slide at that time, the speed variation absorbing effect is greatly improved. When the engine speed approaches the resonance speed of the K + K1 characteristic at start-up or stopping of the engine, the torsional angle between the drive side and driven side flywheels increases. Thus, the K1 spring mechanism is more compressed, and the torque acting on the friction mechanism increases to finally cause the friction mechanism to slide. Upon sliding of the friction spring mechanism, the flywheel device changes its vibrational behavior from the K + K1 characteristic to the K characteristic by jumping over the resonance speed of the K + K1 characteristic. After the jumping, when the rotational speed changes away from the resonance speed of the K + K1 characteristic, the torsional angle between the drive side and driven side flywheels gradually decreases, and the sliding of the friction mechanism finally stops. Then, the flywheel device again operates according to the K + K1 characteristic. In this way, occurrence of resonance while the rotational speed of the flywheel device passes through the resonance speed of the K + K1 characteristic is prevented.

However, there are some problems to be solved in the above-described flywheel device having the momentarily sliding friction mechanism. Namely, the slide beginning or stopping point of the momentarily sliding friction mechanism may fluctuate due to a manufacturing tolerance of the friction mechanism and the abrasion of the abrasive member of the friction mechanism during use.

Though it may be effective to provide some device to cause the friction mechanism to begin or stop sliding at a predetermined torsional angle, such a device would make the flywheel device large in size.

US-A-4,148,200 describes a torsional vibration damper for a torque converter lock-up clutch, comprising a first spring, and a mechanism comprising a second spring and a damping means utilizing a fluid flow, arranged in parallel with one another and acting between input and output clutch members.

An object of the invention is to provide a torsional damper type flywheel device that employs a damping mechanism utilizing a fluid flow for suppression of resonance in place of the momentarily sliding friction mechanism of the above-described flywheel device, to thereby assure a reliable operation and to enable a more effective absorption of rotational speed variation.

The above-described object can be attained by a system comprising an engine and a torsional damper type flywheel device, in accordance with Claim 1.

The torsional damper type flywheel device includes two flywheels arranged coaxially with respect to each other and rotatable relative to each other, a first spring mechanism connecting the flywheels, a second spring mechanism, and a damping mechanism utilizing a fluid flow, arranged in series with the second spring mechanism. The series combination of the second spring mechanism and the damping mechanism is arranged in series with the first spring mechanism and connects the flywheels.

The flywheel device is classified into the following four types:

a first type wherein the damping mechanism includes a hydraulic damping mechanism;

a second type wherein the damping mechanism includes a hydraulic damping mechanism and the flywheel device further includes a momentarily sliding friction mechanism;

a third type wherein the damping mechanism includes an air damper mechanism; and

a fourth type wherein the damping mechanism includes an air damper mechanism and the flywheel device further includes a momentarily sliding friction mechanism.

The third and fourth types also may include a third spring mechanism arranged parallel to the first spring mechanism and parallel to the series combination of the second spring mechanism and the damping mechanism.

The first, second, third, and fourth types will be explained in more detail hereinafter in the explanations of first, second, third, and fourth embodiments of the present invention, respectively.

In the above-described flywheel device in accordance with the present invention, the flywheel device continuously changes its vibrational behavior between two vibrational characteristics, that is, a K characteristic where only the first spring mechanism operates and a K + K1 characteristic where both the first and second spring mechanisms operate. When the relative rotational speed between the flywheels is very high and accordingly the damping mechanism operates as if it were rigid, a characteristic near the K + K1 characteristic is obtained. On the contrary, when the relative rotational speed between the flywheels is very low and accordingly the damping mechanism can stroke almost absolutely freely, a characteristic near the K characteristic is obtained. This continuous change of operational behavior due to the damping mechanism prevents the flywheel device from encountering resonance in substantially the same manner that the momentarily sliding friction mechanism suppresses resonance of the flywheel device having the momentarily sliding friction mechanism. In addition, because the flywheel device does not use a continuously sliding friction mechanism, the speed variation and torque variation absorbing effect is greatly improved in comparison with the flywheel device having the continuously sliding friction mechanism.

The above and other objects, features and advantages of the present invention will become more apparent and will be more readily appreciated from the following detailed description of the preferred exemplary embodiments of the invention taken in conjunction with the accompanying drawings, in which first, second, third and fourth embodiments are illustrated and members having similar structures are denoted with the same reference number throughout the four embodiments, and in which:

FIG. 1 is an elevational view of a torsional damper type flywheel device in accordance with the first embodiment of the present invention;

FIG. 2 is a cross-sectional view of the flywheel device of FIG. 1 taken along line II-II of FIG. 1;

FIG. 3 is a system diagram illustrating a vibrational system of the flywheel device in accordance with the first embodiment;

FIG. 4 is a diagram illustrating a torsional angle-torque characteristic of the flywheel device of the first embodiment;

FIG. 5 is a graph illustrating a rotational speed-acceleration transmittance rate characteristic of the flywheel device according to the first embodiment, FIG. 5 being applicable to the second, third and fourth embodiments;

FIG. 6 is a cross-sectional view of a hydraulic damper of the flywheel device of the first embodiment, FIG 6 being applicable to the second embodiment;

FIG. 7 is an elevational view of one of the drive plates of a drive side flywheel of the flywheel device according to the first embodiment, FIG. 7 being applicable to the second and third embodiments;

FIG. 8 is an elevational view of another of the drive plates of the drive side flywheel of the flywheel device according to the first embodiment, FIG. 8 being applicable to the second and third embodiments;

FIG. 9 is a an elevational view of a driven plate of a driven side flywheel of the flywheel device according to the first embodiment;

FIG. 10 is an enlarged, side view of a first spring mechanism of the flywheel device according to the first embodiment, FIG. 10 being applicable to the second embodiment;

FIG. 11 is an enlarged, side view of a second spring mechanism of the flywheel device according to the first embodiment, FIG. 11 being applicable to the second embodiment;

FIG. 12 is an elevational view of a first control plate of the flywheel device according to the first embodiment, FIG. 12 being applicable to the second embodiment;

FIG. 13 is an elevational view of a torsional damper type flywheel device in accordance with the second embodiment of the present invention;

FIG. 14 is a cross-sectional view of the flywheel device of FIG. 13 taken along line XIV-XIV of FIG. 13;

FIG. 15 is a system diagram illustrating a vibrational system of the flywheel device in accordance with the second embodiment;

FIG. 16A is a diagram illustrating a torsional angle-torque characteristic of the flywheel device of the second embodiment;

FIG. 16B is a diagram illustrating a torsional angle-torque characteristic in an actual operation in the flywheel device of the second embodiment;

FIG. 17 is an elevational view of a driven plate of the flywheel device according to the second embodiment;

FIG. 18 is an elevational view of a second control plate of the flywheel device according to the second embodiment;

FIG. 19 is a cross-sectional view of a friction mechanism of the flywheel device according to the second embodiment;

FIG. 20 is an elevational view of a torsional damper type flywheel device in accordance with the third embodiment of the present invention;

FIG. 21 is a cross-sectional view of the flywheel device of FIG. 20 taken along line XXI-XXI of FIG. 20;

FIG. 22 is a system diagram illustrating a vibrational system of the flywheel device in accordance with the third embodiment;

FIG. 23 is a diagram illustrating a torsional angle-torque characteristic of the flywheel device of the third embodiment;

FIG. 24 is a cross-sectional view of an air damper of the flywheel device of the third embodiment, FIG 24 being applicable to the fourth embodiment;

FIG. 25 is an elevational view of a driven plate of the flywheel device according to the third embodiment;

FIG. 26 is a cross-sectional view of a third spring mechanism of the flywheel device of the third embodiment;

FIG. 27 is an elevational view of a torsional damper type flywheel device in accordance with the fourth embodiment of the present invention;

FIG. 28 is a cross-sectional view of the flywheel device of FIG. 27 taken along line XXVIII-XXVIII of FIG. 27;

FIG. 29 is a system diagram illustrating a vibrational system of the flywheel device in accordance with the fourth embodiment;

FIG. 30 is a diagram illustrating a torsional angle-torque characteristic of the flywheel device of the fourth embodiment;

FIG. 31 is an elevational view of one of the drive plates of a drive side flywheel of the flywheel device according to the fourth embodiment;

FIG. 32 is an elevational view of another of the drive plates of the drive side flywheel of the flywheel device according to the fourth embodiment;

FIG. 33 is a an elevational view of a driven plate of a driven side flywheel of the flywheel device according to the fourth embodiment;

FIG. 34 is an elevational view of a control plate of the flywheel device according to the fourth embodiment; and

FIG. 35 is a cross-sectional view of a friction mechanism of the flywheel device of the fourth embodiment.

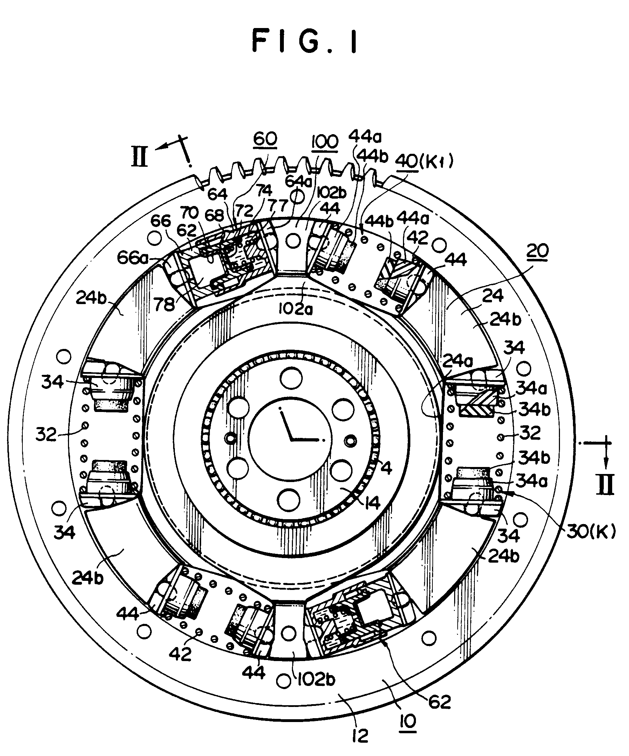

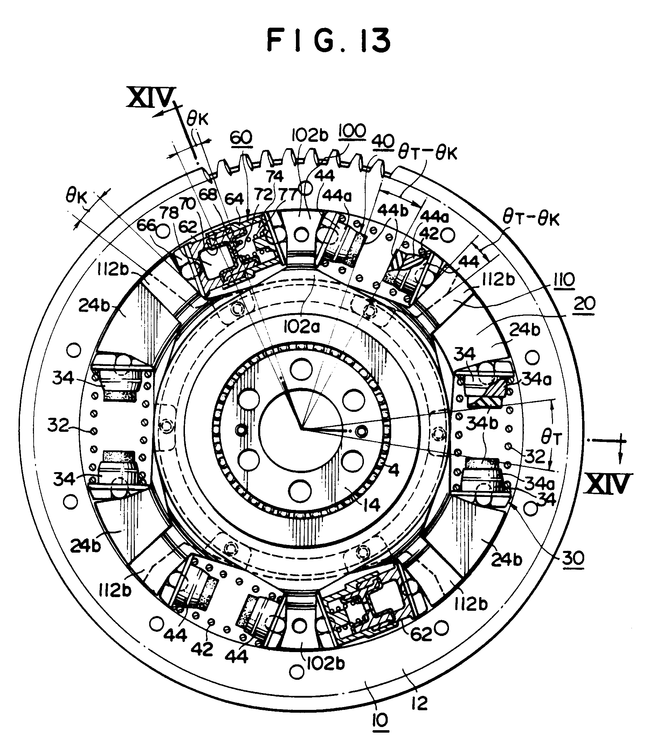

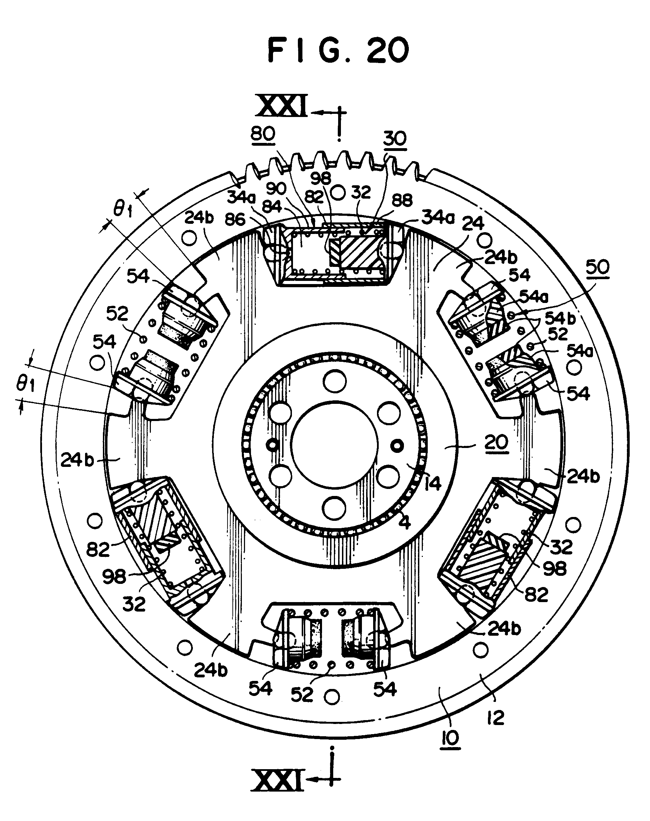

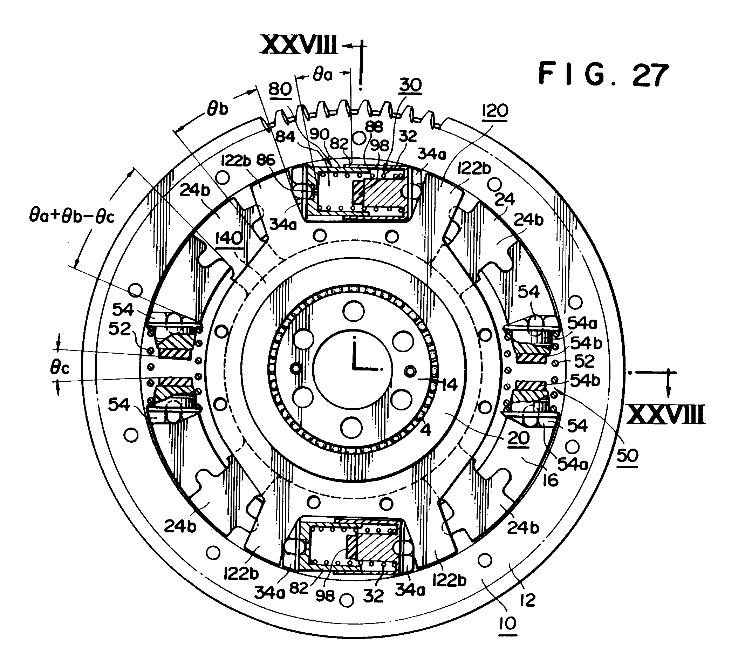

Four embodiments of the present invention will be explained. A first embodiment is illustrated in FIGS. 1-12; a second embodiment is illustrated in FIGS. 13-19, and FIGS. 5-8 and 10-12; a third embodiment is illustrated in FIGS. 20-26, and FIGS. 5, 7 and 8; and a fourth embodiment is illustrated in FIGS. 27-35, and FIGS. 5 and 24.

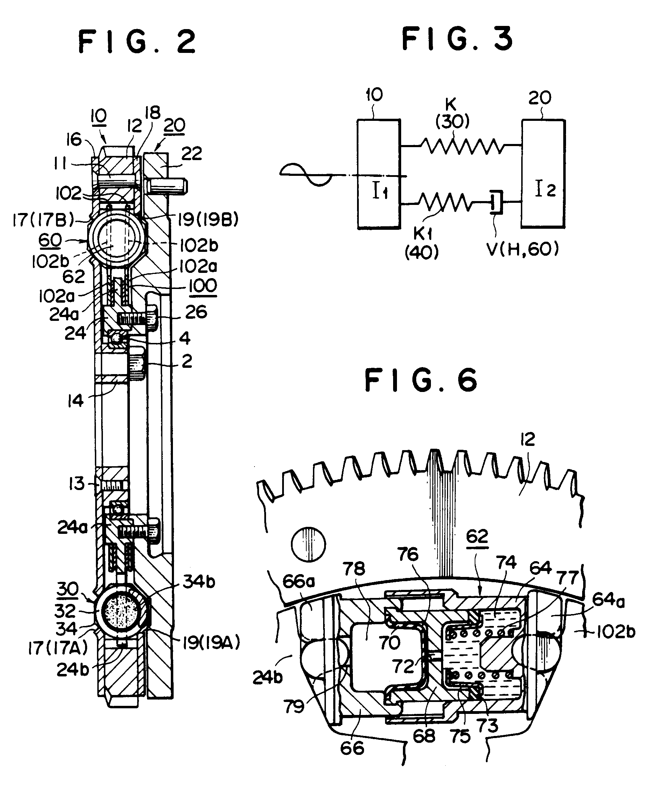

Every embodiment includes a vibrational system for a torsional damper type flywheel and a torsional damper type flywheel structure embodying the vibrational system. As shown in FIGS. 3, 15, 22, and 29, the vibrational system common to every embodiment includes two members defining moment of inertias $I1$ and $I2$ rotatable relative to each other, a first spring member K connecting the moment of inertia defining members, a second spring member K1 which may comprise a metal spring or an air cushion spring, and a damping member V which may comprise a hydraulic damping member H or an air damping member A. Second spring member K1 and damping member V are arranged in series with each other. The series combination of second spring member K1 and damping member V is arranged parallel to first spring member K and connects the moment of inertia defining members I1 and I2.

As shown in FIGS. 1, 13, 20, and 27, the torsional damper type flywheel structure common to every embodiment includes a drive side flywheel 10 and a driven side flywheel 20 arranged coaxially with respect to each other and rotatable relative to each other, a first spring mechanism 30 connecting drive side and driven side flywheels 10 and 20, a second spring mechanism 40 which may include a metal spring mechanism or an air cushion spring mechanism, and a damping mechanism which may include a hydraulic damping mechanism 60 or an air damper mechanism 80. The damping mechanism is arranged in series with second spring mechanism 40. The series combination of second spring mechanism 40 and the damping mechanism is arranged parallel to first spring mechanism 30 as a vibrational system and connects the drive side and driven side flywheels 10 and 20.

Next, structures of each embodiment will be explained in more detail.

FIRST EMBODIMENT (Embodiment shown in FIGS. 1-12)

As shown in FIG. 3, a vibrational system according to the first embodiment includes: the two members defining moment of inertias I1 and I2; first spring member K directly connecting the moment of inertia defining members I1 and I2; second spring member K1; and a hydraulic damping member H as the damping member V arranged in series with second spring member K1. The series combination of second spring member K1 and hydraulic damping member H is arranged in parallel to first spring mechanism K and connects the moment of inertia defining members I1 and I2.

As shown in FIG. 1, in the torsional damper type flywheel device according to the first embodiment, the first spring mechanism 30 directly connects the drive and driven side flywheels 10 and 20, the second spring mechanism 40 includes a metal spring member, and the hydraulic damping mechanism 60. Thus, the torsional damper type flywheel device of the first embodiment includes: drive side flywheel 10; driven side flywheel 20 arranged coaxially with respect to drive side flywheel 10 and rotatable relative to drive side flywheel 10; first spring mechanism 30 directly connecting the drive side and driven side flywheels 10 and 20; second spring mechanism 40 arranged parallel to first spring mechanism 30 as a spring arrangement; and hydraulic damping mechanism 60 arranged in series with second spring mechanism 40. The series combination of second spring mechanism 40 and hydraulic damping mechanism 60 is arranged parallel to first spring mechanism 30 as a vibrational system and connects the drive side and driven side flywheels 10 and 20.

Drive side flywheel 10 is coupled to an engine crankshaft (not shown) by bolts 2, and driven side flywheel 20 is coupled, for example, to a power train of a vehicle including a clutch. As shown in FIG. 2, driven side flywheel 20 is rotatably mounted to drive side flywheel 10 via a bearing member 4.

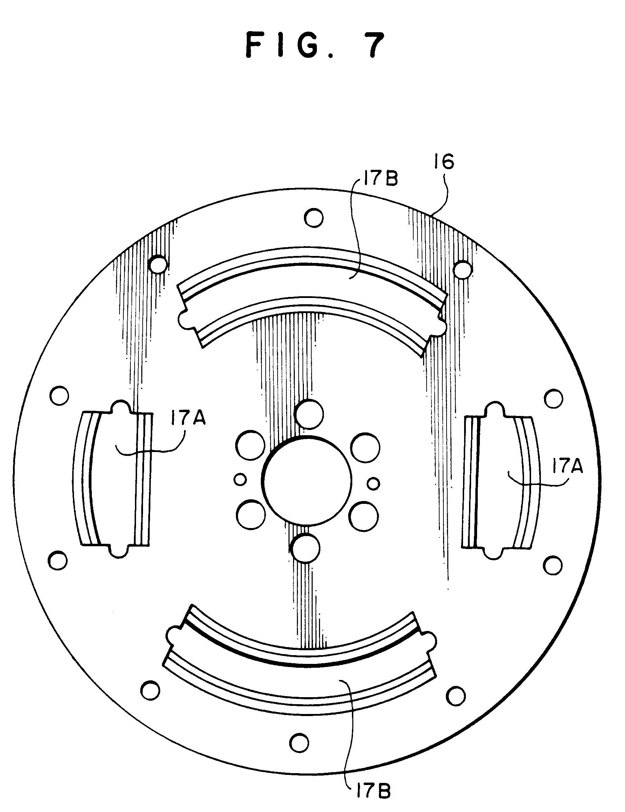

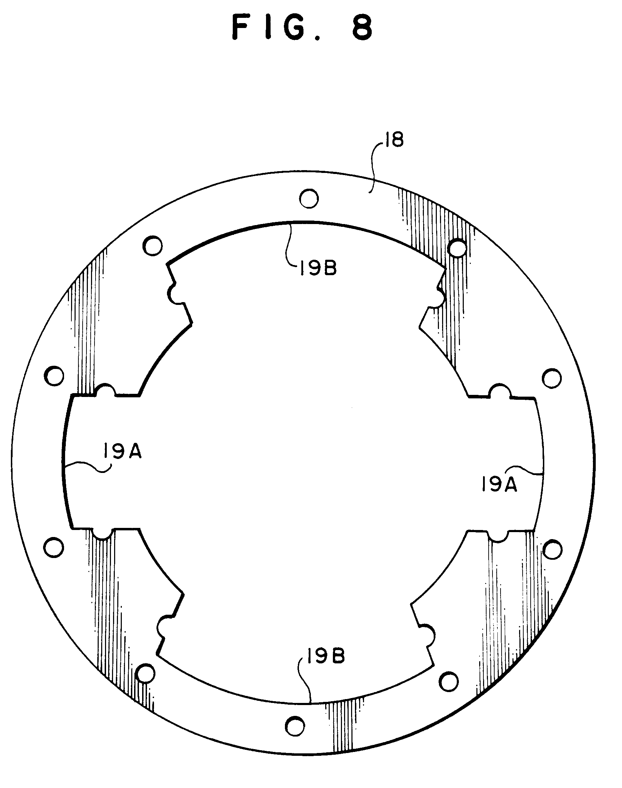

As shown in FIG.2, drive side flywheel 10 includes an outer ring 12, an inner ring 14 disposed radially inside outer ring 12, and drive plates 16 and 18 disposed on opposite sides of outer ring 12 and fixed to outer ring 12 by a rivet 11. Inner ring 14 is fixed to one of the drive plates 16 by a bolt 13. As shown in FIGS. 7 and 8, one drive plate 16 has openings 17 formed therein including first openings 17A and second openings 17B, and the other drive plate 18 has slots 19 formed therein including first slots 19A and second slots 19B. Circumferential ends of first openings 17A and first slots 19A detachably engage first spring mechanism 30, and circumferential ends of second openings 17B and second slots 19B detachably engage the series combination of second spring mechanism 40 and hydraulic damping mechanism 60.

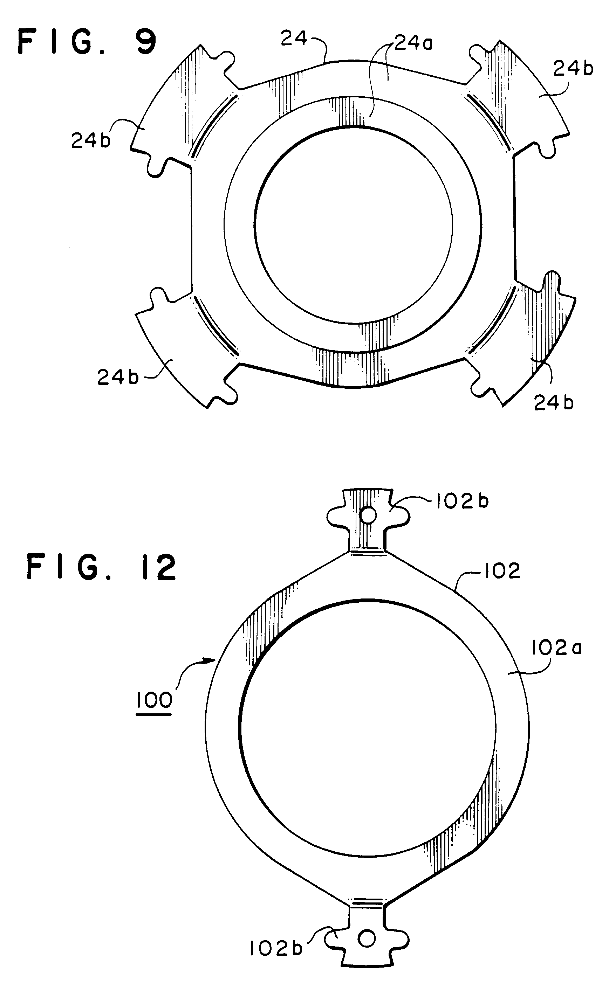

As shown in FIG. 2, driven side flywheel 20 includes a flywheel body 22 and a driven plate 24 fixed to flywheel body 22 via a bolt 26. As shown in FIG. 9, driven plate 24 includes an annular portion 24a and arms 24b extending radially outwardly from the annular portion 24a. As shown in FIG. 1, arms 24b of driven plate 24 detachably engage first spring mechanism 30 and the series combination of second spring mechanism 40 and hydraulic damping mechanism 60.

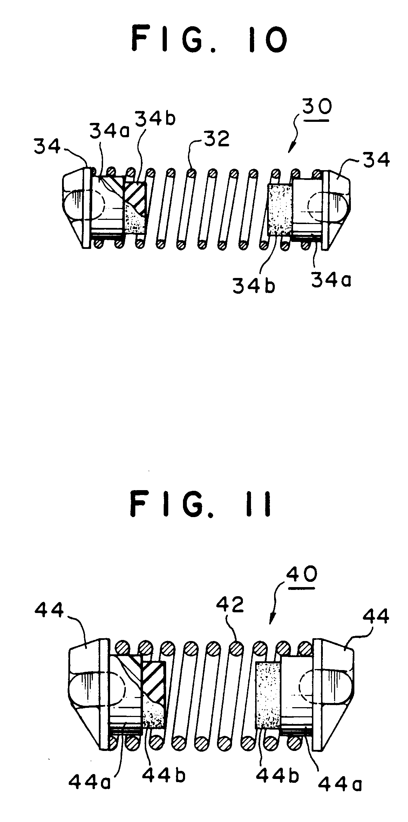

As shown in FIG. 10, first spring mechanism 30 includes at least one first coil spring 32 and spring seats 34 disposed at respective ends of first coil spring 32. Each of the spring seats 34 includes a hard synthetic resin portion 34a. At least one of the spring seats 34 disposed at the ends of first coil spring 32 also includes an elastic cushion 34b fixed to the hard synthetic resin portion 34a so as to oppose an opposite spring seat. As shown in FIG. 2, first spring mechanism 30 is disposed in first opening 17A formed in drive plate 16 and first slot 19A formed in drive plate 18.

Similarly, as shown in FIG. 11, second spring mechanism 40 includes at least one second coil spring 42 and spring seats 44 disposed at respective ends of second coil spring 42. Each of the spring seats 44 includes a hard synthetic resin portion 44a. At least one of the spring seats 44 disposed at the ends of second coil spring 42 also includes an elastic cushion 44b fixed to the hard synthetic resin portion 44a so as to oppose an opposite spring seat.

As shown in FIGS. 1 and 2, first control plate 100 is provided rotatably relative to the drive side and driven side flywheels 10 and 20. First control plate 100 connects second spring mechanism 40 and hydraulic damping mechanism 60. As shown in FIG. 2, first control plate 100 includes a pair of first control plate elements 102. As shown in FIG. 12, each of the first control plate elements 102 includes an annular portion 102a and arms 102b extending radially outwardly from annular portion 102a of first control plate 100. Arms 102b of first control plate 100 connect second spring mechanism 40 and hydraulic damping mechanism 60 so that second spring mechanism 40 and hydraulic damping mechanism 60 are arranged in series with each other. The series combination of second spring mechanism 40 and hydraulic damping mechanism 60 is disposed in second opening 17B formed in drive plate 16 and second slot 19B formed in drive plate 18.

Hydraulic damping mechanism 60 includes at least one hydraulic damper 62. In the embodiment of FIG. 1, hydraulic damping mechanism 60 includes two hydraulic dampers 62.

As shown in FIG. 6, the hydraulic damper 62 includes first and second outer cylinders 64 and 66 axially movable relative to each other, an inner cylinder 68 fixed to second outer cylinder 66 and axially slidable relative to first outer cylinder 64, and a diaphragm 70 disposed on a side of inner cylinder 68 closer to second outer cylinder 66. Inner cylinder 68 has an orifice 72 formed therein. Inner cylinder 68 and first outer cylinder 64 define a first chamber 74 therein, and inner cylinder 64 and diaphragm 70 define a second chamber 76 therein. First and second chambers 74 and 76 are filled with liquid such as oil and communicate with each other through orifice 72 formed in inner cylinder 68 so that orifice 72 generates a viscous damping when the liquid flows through orifice 72. Diaphragm 70 and second outer cylinder 66 define an air chamber 78 therein. Second outer cylinder 66 has a hole 79 formed therein which penetrates the wall of second outer cylinder. Air chamber 78 communicates with the environment through hole 79 formed in second outer cylinder 66. A return spring 77 is disposed in the first chamber 74 and biases inner cylinder 68 in a direction away from first outer cylinder 64. A spring seat member 75 is disposed in first chamber 74 and supports one end of return spring 77. A seal member 73 is also provided slidably relative to first outer cylinder 64 and seals a sliding clearance between inner cylinder 68 and first outer cylinder 64. Seal member 73 is held between inner cylinder 68 and spring seat member 75 biased by return spring 77 toward inner cylinder 68. First and second outer cylinders 64 and 66 have end portions 64a and 66a, respectively, having contours similar to spring seats 44 disposed at the ends of second coil spring 42 of second spring mechanism 40.

Next, characteristics and operation of the vibrational system and the flywheel device according to the first embodiment will be explained.

Under acceleration, a torque acting on drive side flywheel 10 from the engine crankshaft is transmitted to driven side flywheel 20 via two torque transmitting paths, namely, a path including first spring mechanism 30 and a path including the series combination of second spring mechanism 40 and hydraulic damping mechanism 60. Under deceleration, a torque is transmitted from driven side flywheel 20 to drive side flywheel 10 via the two paths.

FIG. 4 illustrates the relationship between a relative torsional angle $\theta$ between the drive side and driven side flywheels 10 and 20 and a torque T transmitted between the drive side and driven side flywheels 10 and 20. It should be understood that the characteristics of the negative region is symmetric to those of the positive region with respect to the zero point in FIG. 4, though only the positive region is fully illustrated. Because the vibrational system includes hydraulic damping mechanism 60, the torque changes corresponding to a torsional speed $s$ between the drive side and driven side flywheels 10 and 20. When the torsional speed $s$ is excessively high, orifice 72 generates an excessively large viscous damping force and hydraulic damping mechanism 60 operates rigidly. In such a condition, both the first and second spring mechanism 30 and 40 operate and a $K + K1$ characteristic is obtained. In this instance, K is a spring constant of first spring mechanism 30; K1 is a spring constant of second spring mechanism 40; and $K + K1$ is a synthetic spring constant of the first and second spring constants. On the contrary, when the torsional speed $s$ is very small or zero, the hydraulic damping mechanism 60 strokes freely and makes second spring mechanism 40 ineffective. When the torsional speed $s$ is equal to zero, at torsional angles from a zero torsional angle to a torsional angle $\theta k$ corresponding to the maximum stroke of the hydraulic damping mechanism 60, only the first spring mechanism 30 operates, and at tosional angles above the angle $\theta k$, both the first

and second spring mechanisms 30 and 40 operate.

Because hydraulic damping mechanism 60 operates between the above-described two extreme cases, the flywheel device transmits the torque between the drive side and driven side flywheels 10 and 20 along a broken line, a dotted chain line and a two-dotted chain line as shown in FIG. 4, corresponding to the torsional speed s. The higher the torsional speed s is, the more effectively damping mechanism 60 transmits the torque, and therefore, second spring mechanism 40 begins to operate at a smaller torsional angle. Each of the characteristic lines has a bent point t above which the characteristic line extends with a steeper inclination. At the point t cushions 44b of spring seats 44 of second spring mechanism 40 are brought into contact with each other and cushions 34b of spring seats 34 of first spring mechanism 30 are brought into contact with each other at the same time. The spring constant of the cushions 44b and 34b are higher than those of the first and second coil springs 32 and 42.

FIG. 5 illustrates an engine speed-acceleration transmittance rate characteristic of the flywheel device according to the first embodiment. In FIG. 5, $w/w_0$ illustrates a ratio of an engine speed w to the resonance speed $w_0$ of the system. It is to be understood that the smaller the acceleration transmittance rate J is, the greater the speed variation or torque variation absorbing effect is. The actual characteristic of the flywheel device of the present invention is shown by a full line in FIG. 5 and is positioned between two characteristics shown by two-dotted chain lines, that is, a K characteristic where hydraulic damping mechanism 60 strokes absolutely freely and only the first spring mechanism 30 operates, and a K + K1 characteristic where hydraulic damping mechanism 60 is perfectly rigid and both the first and second spring mechanisms 30 and 40 operate. The characteristic of the present invention as shown by the full line in FIG. 5 illustrates the characteristic in the case where the viscous damping coefficient z of hydraulic damping mechanism 60 relative to the critical damping coefficient thereof is 0.53. In FIG. 5, a broken line illustrates the characteristic of the flywheel device not having a viscous damping mechanism but having a momentarily sliding friction mechanism which was discussed, for the purpose of comparison. As will be understood from FIG. 5, the vibrational peak point of the flywheel device of the present invention is positioned near the speed of $w/w_0 = 1.3$, and the magnitude is substantially equal to that of the flywheel device having only the momentarily sliding friction mechanism. This means that in the present invention, resonance of the flywheel device while passing through the resonance speed is effectively suppressed like in the flywheel device having only the momentarily sliding friction mechanism. The difference between the flywheel device having hydraulic damping mechanism 60 of the present invention and the flywheel device having only the momentarily sliding friction mechanism is that the flywheel device having hydraulic damping mechanism 60 continuously changes its vibrational behavior between the K characteristic and the K + K1 characteristic, while the flywheel device having only the momentarily sliding friction mechanism almost non-continuously changes its behavior between the K characteristic and the K + K1 characteristic with the sliding of the friction mechanism. As is seen in FIG. 5, the characteristic line of the flywheel device of the present invention extends below that of the flywheel device having only the momentarily sliding friction mechanism in the standard range of engine speeds above the engine idling speed. This means that the speed variation or torque variation absorbing effect is more improved in the present invention than in the flywheel device having only the momentarily sliding friction mechanism. The hatched portion of FIG. 5 illustrates this improvement.

SECOND EMBODIMENT (shown in FIGS. 13-19, and also in FIGS. 5-8, and 10-12)

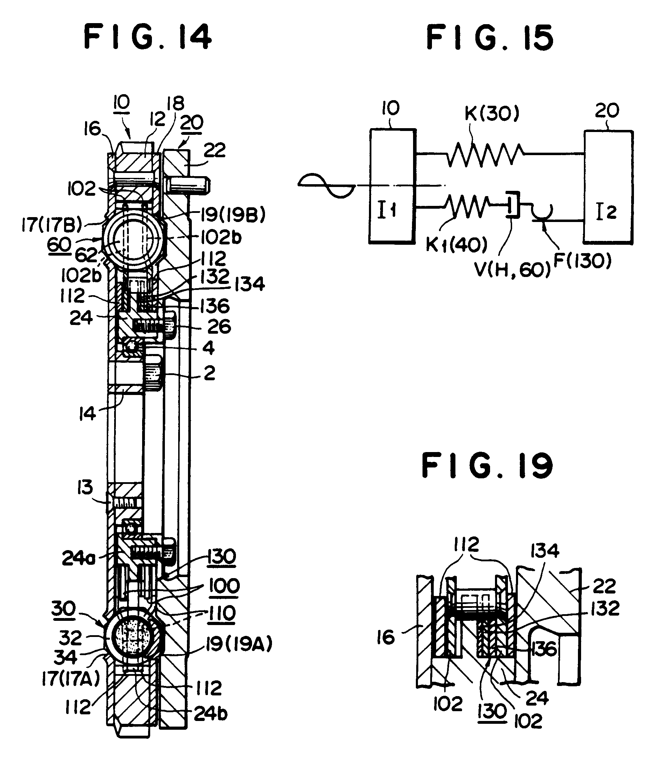

The vibrational system and flywheel device according to the second embodiment further includes a momentarily sliding friction mechanism in comparison with the first embodiment. More particularly, as shown in FIG. 15, a vibrational system for a torsional damper type flywheel device according to the second embodiment includes the two members defining moment of inertias I1 and I2, first spring member K directly connecting the moment of inertia defining members I1 and I2, second spring member K1, hydraulic damping member H as damping member V arranged in series with second spring member K1, and a friction member F arranged in series with the series combination of second spring member K1 and hydraulic damping member H. The series combination of second spring member K1, hydraulic damping member H and friction member F is arranged parallel to first spring member K and connects the moment of inertia defining members I1 and I2.

As shown in FIGS. 13 and 14, a torsional damper type flywheel device according to the second embodiment includes drive side flywheel 10, driven side flywheel 20 arranged coaxially with respect to drive side flywheel 10 and rotatable relative to drive side flywheel 10, first spring mechanism 30 directly connecting the drive side and driven side flywheels 10 and 20, second spring mechanism 40 arranged parallel to first spring mechanism 30 as a spring arrangement, hydraulic damping mechanism 60 arranged in series with second spring mechanism 40, and a friction mechanism 130 arranged in series with the series combination of second spring mechanism 40 and hydraulic damping mechanism 60. The series combination of second spring mechanism 40, hydraulic damping mechanism 60 and friction mechanism 130 is arranged parallel to first spring mechanism 30 as a vibrational system and connects the drive side and driven side flywheels 10 and 20.

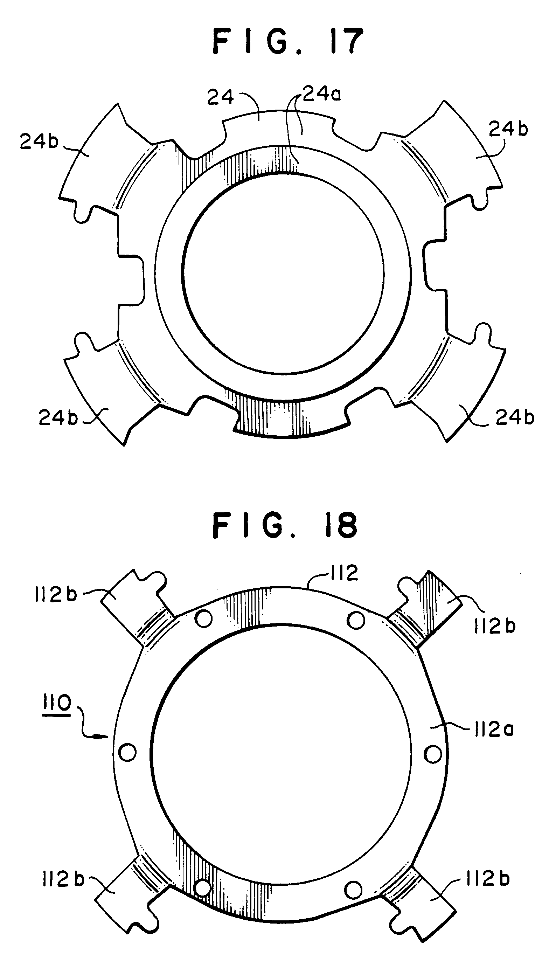

Second spring mechanism 40 and hydraulic damping mechanism 60 are connected to each other via a first control plate 100 like the first embodiment. Structures of drive side flywheel 10, driven side flywheel 20, first spring mechanism 30, second spring mechanism 40, and first control plate 100 of the flywheel device according to the second embodiment are the same as the structures of the drive side flywheel 10, the driven side flywheel 20, the first spring mechanism 30, the second spring mechanism 40, and the first control plate 100, respectively, of the flywheel device according to the first embodiment explained above, except that the driven plate 24 of driven side flywheel 20 of the second embodiment has the contour shown in FIG. 17 while the driven plate 24 of the first embodiment has the contour shown in FIG. 9. However, all the explanations made about the drive side flywheel 10, the driven side flywheel 20 including driven plate 24, the first spring mechanism 30, and first control plate 100 of the first embodiment are applicable to the respective structures of the second embodiment. Further, the annular portion 24a (see FIG. 17) of driven plate 24 of the second embodiment slidably contacts friction mechanism 130.

Also, structures of hydraulic damping mechanism 60 including hydraulic damper 62 of the flywheel device of the second embodiment are the same as the structures of the hydraulic damping mechanism 60 including the hydraulic damper 62 of the flywheel device according to the first embodiment explained above. All the explanations made about the hydraulic damping mechanism 60 including the hydraulic damper of the first embodiment with reference to FIG. 6 are applicable to the respective structure of the second embodiment.

As compared with the flywheel device of the first embodiment, the flywheel device of the second embodiment further includes friction mechanism 130 and a second control plate 110.

Second control plate 110 is rotatable relative to the drive side and driven side flywheels 10 and 20 and relative to first control plate 100. As shown in FIG. 14, second control plate 110 is disposed between hydraulic damping mechanism 60 and friction mechanism 130. As shown in FIG. 18, second control plate 110 includes a pair of second control plate elements 112. Each of the second control plate elements 112 includes an annular portion 112a and arms 112b extending radially outwardly from annular portion 112a of second control plate 110. Annular portion 112a of second control plate 110 slidably engages the friction mechanism 130, and arms 112b of second control plate 110 detachably engages the series combination of hydraulic damping mechanism 130 and second spring mechanism 40.

As shown in FIG. 19, friction mechanism 130 includes a thrust plate 132 rotatable relative to the drive side and driven side flywheels 10 and 20, a thrust lining 134 constructed of abrasive material and preferably coupled to thrust plate 132, and a cone spring 136 generating an axial biasing force when cone spring 136 is elastically deformed. Thrust plate 132, thrust lining 134 and cone spring 136 are disposed between annular portion 112a of second control plate 110 and annular portion 24a of driven plate 24 of driven side flywheel 20 so that cone spring 136 is compressed so as to generate a predetermined frictional force Fr of friction mechanism 130.

The function and operation of the flywheel device according to the second embodiment will be explained.

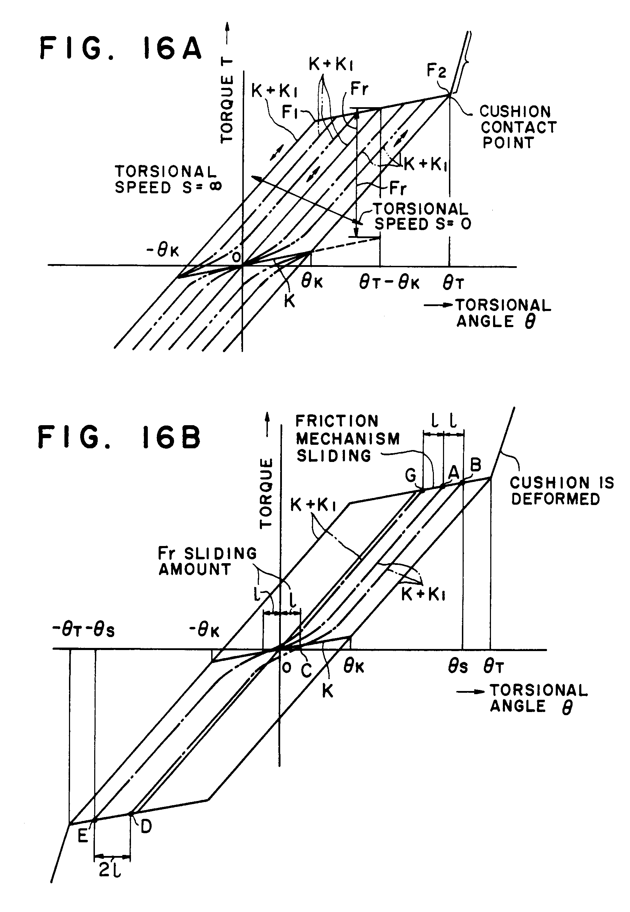

As shown in FIGS. 16A and 16B, because the vibrational system and flywheel device of the second embodiment includes friction mechanism 130 which begins to slide when the torque force acting on friction mechanism 130 exceeds the predetermined frictional force Fr of friction mechanism 130, the transmitted torque is limited by a line connecting points F1 and F2 (see FIG. 16A) on which friction mechanism 130 slides, unlike the torque characteristic of the first embodiment shown in FIG. 4. In actual operation, as shown in FIG. 16B, the transmitted torque changes along a hysteresis loop defined by points O, A, B, C, D, E, F, A, B in order. On the line portions between points A and B, between points D and E, and between points G and B, the friction mechanism 130 momentarily slides. The sliding amount 1 of the friction mechanism 130 changes corresponding to the amount of the input torque variation. Point F2 in FIG. 16A illustrates a point where every cushion of every spring seat of every spring mechanism are brought into contact with an opposing spring seat.

With respect to the engine speed-acceleration transmittance rate characteristic, substantially the same characteristic as that of the first embodiment as was explained with reference to FIG. 5 is also obtained with the second embodiment.

The difference between the second embodiment and the first embodiment is that, in the second embodiment, not only the damping force of hydraulic damping mechanism 60 but also the damping force due to friction mechanism 130 operates on the flywheel device. Accordingly, a more quick and effective damping or absorption than in the first embodiment is obtained in the speed variation and torque variation. Further, because of the above-described torque limitation due to friction mechanism 130, an excessively large force exceeding the predetermined frictional force Fr of friction mechanism 130 does not act on hydraulic damping mechanism 60 at a range below the torsional angle $\theta_T$ (see FIG. 16A). In this connection, $\theta_T$ illustrates the angle where every cushion is brought into contact with the opposing spring seat. Thus, hydraulic damper 62 is protected from an excessively large torque.

THIRD EMBODIMENT (shown in FIGS. 20-26 and also in FIGS. 5, 7 and 8)

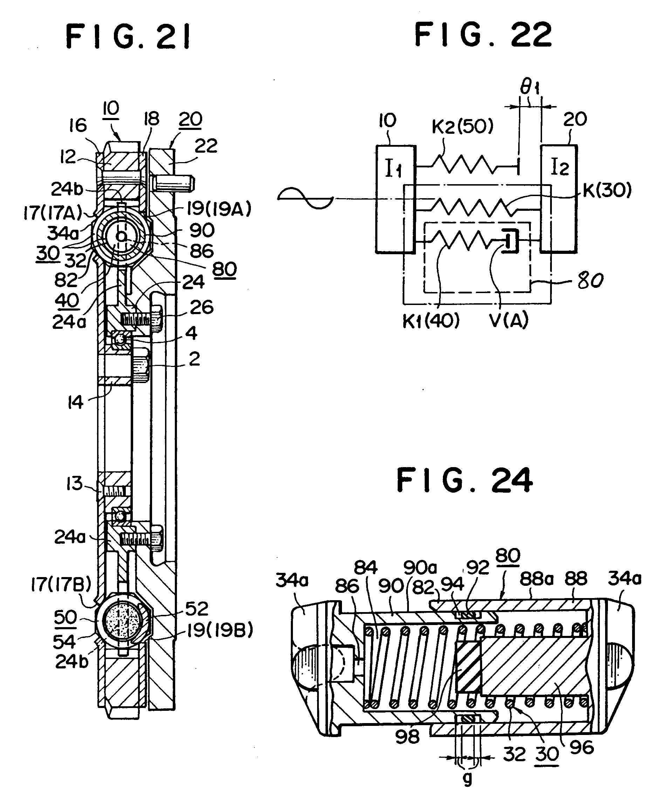

In the third embodiment, the damping mechanism includes an air damper mechanism. More particularly, as shown in FIG. 22, a vibrational system for a torsional damper type flywheel device according to the third embodiment includes the two members defining moment of inertias I1 and I2, first spring member K connecting the moment of inertia defining members I1 and I2, and a spring and damping member A connecting the moment of inertia defining members I1 and I2. The spring and damping member A includes a second spring member K1 of an air cushion operating parallel to first spring member K and a damping member V operating in series with second spring member K1, when the spring and damping member A strokes. Therefore, in the vibrational system of the third embodiment, second spring member K1 and damping member V are included in the spring and damping member A.

As also shown in FIG. 22, the vibrational system of the third embodiment may further include a third spring member K2 arranged parallel to first spring member K and the series combination of second spring member K1 and damping member V. Third spring member K2 connects the moment of inertia defining members I1 and I2 with a predetermined gap $\theta1$.

As shown in FIGS. 20 and 21, a torsional damper type flywheel according to the third embodiment includes: drive side flywheel 10, driven side flywheel 20 arranged coaxially with respect to drive side flywheel 10 and rotatable relative to drive side flywheel 10, first spring mechanism 30 connecting the drive side and driven side flywheels 10 and 20, and an air damper mechanism 80 connecting the drive side and driven side flywheels 10 and 20. Air damper mechanism 80 includes at least one air damper 82 defining an air chamber 84 therein and having an orifice 86. Air damper mechanism 80 includes second spring mechanism 40 whose spring force comprises an air cushion force generated in air chamber 84 of every air damper 82 and a damping mechanism whose damping force is generated by air flow through orifice 86 of every air damper 82. Second spring mechanism 40 and the damping mechanism are arranged in series with each other as a vibrational system, and the series combination of second spring mechanism 40 and the damping mechanism are arranged parallel to first spring mechanism 30 as a vibrational system.

As shown in FIGS. 7, 8 and 25, the structures of drive side flywheel 10 and driven side flywheel 20 of the third embodiment are the same as those of drive side flywheel 10 and driven side flywheel 20, respectively, of the first embodiment except that the circumferential ends of second openings 17A and slots 19A detachably engage air damper mechanism 80, and arms 24b of driven plate 24 detachably engage air damper mechanism 80. Except these different points, all the explanations made in the first embodiment with respect to the drive side and driven side flywheels 10 and 20 of the first embodiment are applicable to the respective structures of the third embodiment.

As shown in FIG. 24, first spring mechanism 30 includes at least one first coil spring 32. First coil spring 32 is housed in air chamber 84 of air damper 82 and also operates as a return spring of the air damper 82.

As shown in FIG. 24, air damper 82 includes an outer cylinder 88 including an end portion 34a and a cylindrical portion 88a, an inner cylinder 90 including an end portion 34a and a cylindrical portion 90a, and a seal ring 92. Inner cylinder 90 is axially slidable relative to outer cylinder 88 and defines air chamber 84 of air damper 82 therein in cooperation with outer cylinder 88. Seal ring 92 is disposed between cylindrical portion 88a of outer cylinder 88 and cylindrical portion 90a of inner cylinder 90. Inner cylinder 90 has a groove 94 formed in cylindrical portion 90a of inner cylinder 90 and circumferentially extending over an entire circumference of cylindrical portion 90a of inner cylinder 90. Seal ring 92 is fitted in groove 94. Seal ring 92 is slidably pressed against an inside surface of cylindrical portion 88a of outer cylinder 88 and loosely contacts an outside surface of cylindrical portion 90a of inner cylinder 90. There is a gap g between seal ring 92 and at least one side surface of groove 94. Air damper 82 further includes an axially extending pillar 96 formed in at least one of end portion 34a of outer cylinder 88 and end portion 34a of inner cylinder 90. A cushion 98 constructed of elastic material such as rubber is fixed to the end of pillar 96. End portion 34a of outer cylinder 88 and end portion 34a of inner cylinder 90 also constitute spring seats for first coil spring 32 of first spring mechanism 30.

As shown in FIGS. 20 and 21, the flywheel device according to the third embodiment may further include a third spring mechanism 50 arranged parallel to first spring mechanism 30 and parallel to the series combination of the second spring mechanism 40 of air cushion and the damping mechanism. Third spring mechanism 50 connects the drive side and driven side flywheels 10 and 20 with a predetermined gap $\theta1$. Though third spring mechanism 50 is not absolutely necessary, it is preferable to provide third spring mechanism 50, because the spring force of air cushion of the second spring mechanism may be insufficient in a high torque condition.

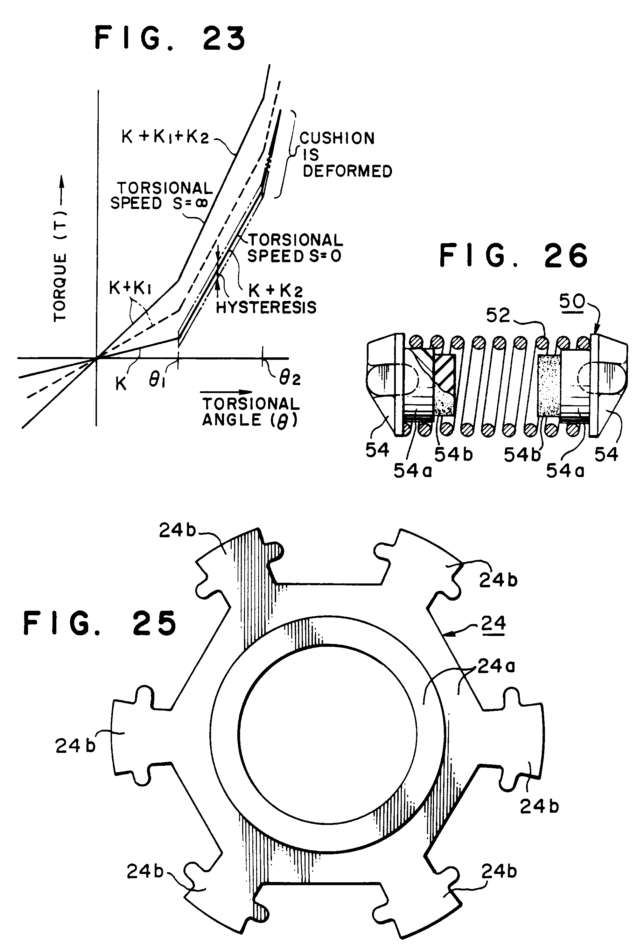

As shown in FIG. 26, third spring mechanism 50 includes at least one third coil spring 52 and spring seats 54 provided at ends of each third coil spring 52. Each of the spring seats 54 includes a hard synthetic resin portion 54a. At least one of spring seats 54 provided at the ends of each third coil spring 52 includes an elastic cushion 54b fixed to hard synthetic resin portion 54a so as to oppose an opposite spring seat 54.

In the case where third spring mechanism 50 is provided, as shown in FIGS. 7 and 8, drive plates 16 and 18 of drive side flywheel 10 have first openings 17A and slots 19A, respectively, and second openings 17B and slots 19B, respectively. Circumferential ends of first openings 17A and slots 19A detatchably engage air damper mechanism 80, and circumferential ends of second openings 17B and slots 19B detachably engage third spring mechanism 50.

Similarly, in the case where third spring mechanism 50 is provided, as shown in FIG. 25, arms 24b of driven plate 24 of driven side flywheel 20 detachably engage air damper mechanism 80 and third spring mechanism 50.

FIG. 20 illustrates a case where three air dampers 82 and three third coil springs 52 are provided and where air dampers 82 and third coil springs 52 are arranged one after the other in the circumferential direction of the flywheel device.

A torsional angle-torque characteristic and an engine speed-acceleration transmittance rate characteristic of the flywheel device according to the third embodiment will be explained with reference to FIGS. 22, 23 and 5. The vibrational system of FIG. 22 includes third spring mechanism 50 having a synthetic spring constant K2. In the case where no third spring mechanism 50 is provided, it should be understood that the spring constant K2 is equal to zero in the following explanations.

When air damper 82 strokes at a high speed, the air in air chamber 84 can scarcely pass through orifice 86 of air damper 82 and the air in air chamber 84 of air damper 82 operates so as to generate an air cushion spring operating as second spring mechanism 40. The synthetic spring constant of the air cushion springs of air dampers 82 is K1. For example, when three air dampers 82 are provided, the spring constant of the air cushion spring of each air damper 82 is K1/3, and the synthetic spring constant of air damper mechanism 80 including the three air dampers 82 is K1, because the three air dampers 82 are arranged parallel to each other as a spring arrangement. The spring constant K1 of air damper mechanism 80 changes corresponding to the speed of stroke of air damper 82. In this instance, when air damper 82 strokes at a high speed, the value of K1 is large, and air damper 82 operates comparatively rigidly. On the contrary, when air damper 82 strokes at a low speed, the value of K1 is small, and air damper 82 strokes comparatively freely.

Though FIG. 23 only illustrates the characteristic in a positive torsional angle range, the characteristic of the negative torsional angle range should be understood to be symmetric to that of the positive torsional angle range. As shown in FIG. 23, when the relative torsional angle is smaller than the angle of the predetermined gap $\theta1$ between third spring mechanism 50 and driven side flywheel 20, only the first and second spring mechanisms 30 and 40 transmit the torque between drive side flywheel 10 and driven side flywheel 20, and the flywheel device operates according to the characteristic (shown by a broken line in FIG. 23) having a spring constant $K + K1$ which is a summation of the spring constant K of first spring mechanism 30 and the spring constant K1 of second spring mechanism 40. As was discussed above, the value of K1 changes corresponding to the torsional speed of the flywheel device. On the contrary, when the torsional angle is larger than the torsional angle $\theta1$ and smaller than $\theta2$, third spring mechanism 50 also operates. In this connection, the angle $\theta2$ is a torsional angle where all the cushions of all the spring seats are brought into contact with the opposing spring seats. In the torsional angle range between $\theta1$ and $\theta2$, the flywheel device operates according to a characteristic $K + K1 + K2$ that is defined as a summation of the spring constant K of first spring mechanism 30, the spring constant K1 of second spring mechanism 40 and the spring constant K2 of third spring mechanism 50. As was illustrated above, the value of K1 changes corresponding to the stroke speed of air damper 82. In torsional angles above the angle $\theta2$, all the cushions including cushion 98 of every air damper 82 are elastically deformed. As a result, the characteristic rises with a very steep angle.

The engine speed-acceleration transmittance rate characteristic of the flywheel device or system according to the third embodiment is substantially the same as that of the flywheel device according to the first embodiment, and thus, FIG. 5 is also applicable to the third embodiment. However, when FIG. 5 is applied to the third embodiment, hydraulic damper 62 and hydraulic damping mechanism 60 in the explanations of the first embodiment should be read as air damper 82 and air damper mechanism 80, respectively. In this instance, the damping coefficient $z$ of air damping mechanism 80 can be adjusted to a desired value by selecting the diameter of orifice 86, and the spring constant K1 can be adjusted to a desired value by selecting the volume of air chamber 84.

When seal ring 92 of air damper 80 is pressed against the inner surface of outer cylinder 88 of air damper 82, friction is generated between seal ring 92 and outer cylinder 88, and the damping of vibration is greatly suppressed.

As will be understood from FIG. 5, also in the third embodiment, suppression of resonance while passing through the resonance speed of first spring mechanism 30 is effectively suppressed, and the speed variation absorbing effect at the standard range of engine speeds above the idling speed of the engine is greatly improved. Further, according to the third embodiment, there is no fear of oil release because the viscous damping mechanism is constructed of air damper 82. Furthermore, because second spring mechanism 40 includes the air cushion of air damper 82 and there is no need to provide a second coil spring of metal unlike the first and second embodiments, the flywheel device of the third embodiment can be designed to be compact.

FOURTH EMBODIMENT (shown in FIGS. 27-35 and also in FIGS. 5 and 6)

A vibrational system and a torsional damper type flywheel device of the fourth embodiment further include a control plate 120 and a friction mechanism 140 in comparison with the flywheel device of the third embodiment.

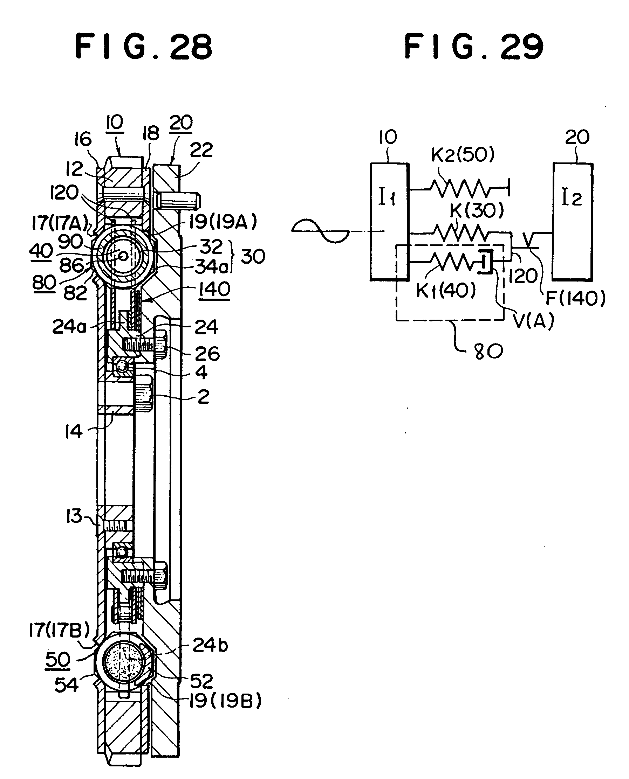

More particularly, as shown in FIG. 29, a vibrational system for a torsional damper type flywheel device according to the fourth embodiment includes: the first and second members defining moment of inertias I1 and I2; a control plate member 120 rotatable relative to the first and second moment of inertia defining members I1 and I2; first spring member K connecting the first moment of inertia defining member I1 and control plate member 120; spring and damping member A connecting the first moment of inertia defining member I1 and control plate member 120; and a friction member 140 connecting control plate member 120 and the second moment of inertia defining member I2.

The spring and damping member A includes second spring member K1 of air cushion operating parallel to first spring member K and damping member V operating in series with second spring member K1.

As shown in FIG. 29, the vibrational system of the fourth embodiment also may include third spring member K2 arranged parallel to first spring member K and parallel to the series combination of second spring member K1 and damping member V. Third spring member K2 connects the moment of inertia defining members I1 and I2 with a predetermined gap.

As shown in FIGS. 27 and 28, a torsional damper type flywheel device according to the fourth embodiment includes drive side flywheel 10, driven side flywheel 20 arranged coaxially with respect to drive side flywheel 10 and rotatable relative to drive side flywheel 10, a control plate 120 rotatable relative to the drive side and driven side flywheels 10 and 20, first spring mechanism 30 connecting drive side flywheel 10 and control plate 120, air damper mechanism 80 connecting drive side flywheel 10 and control plate 120 and including at least one air damper 82 defining air chamber 84 therein and having orifice 86, and a friction mechanism 140 connecting control plate 120 and driven side flywheel 20. Air damper mechanism 80 includes second spring mechanism 40 whose spring force is defined by the air cushion of air chamber 84 of every air damper 82 and damping force is generated by orifice 86 of every air damper 82. Second spring mechanism 40 and the damping mechanism are arranged in series with each other as a vibrational system, and the series combination of second spring mechanism 40 and the damping mechanism is arranged parallel to first spring mechanism 30 as a vibrational system.

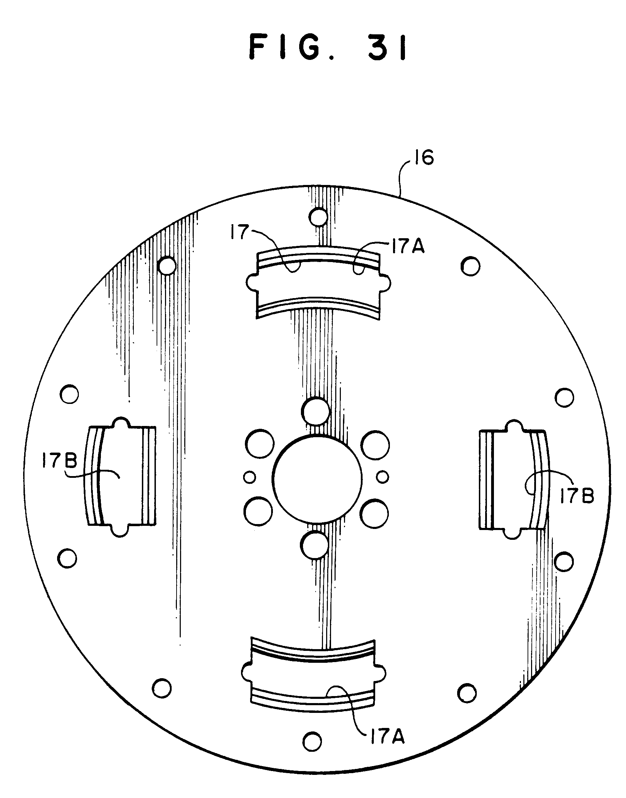

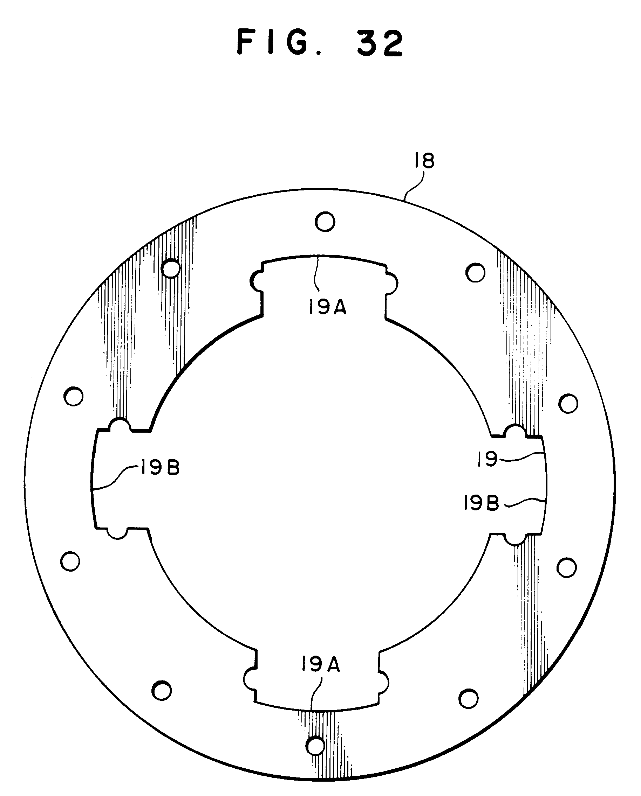

The structures of drive side flywheel 10 of the fourth embodiment are substantially the same as those of drive side flywheels 10 of the third embodiment, and all the explanations made with respect to drive side flywheel 10 of the third embodiment are applicable to drive side flywheel 10 of the fourth embodiment, though the sizes of the openings 17A and 17B and slots 19A and 19B of the fourth embodiment (see FIGS 31 and 32) are different from those of the third embodiment.

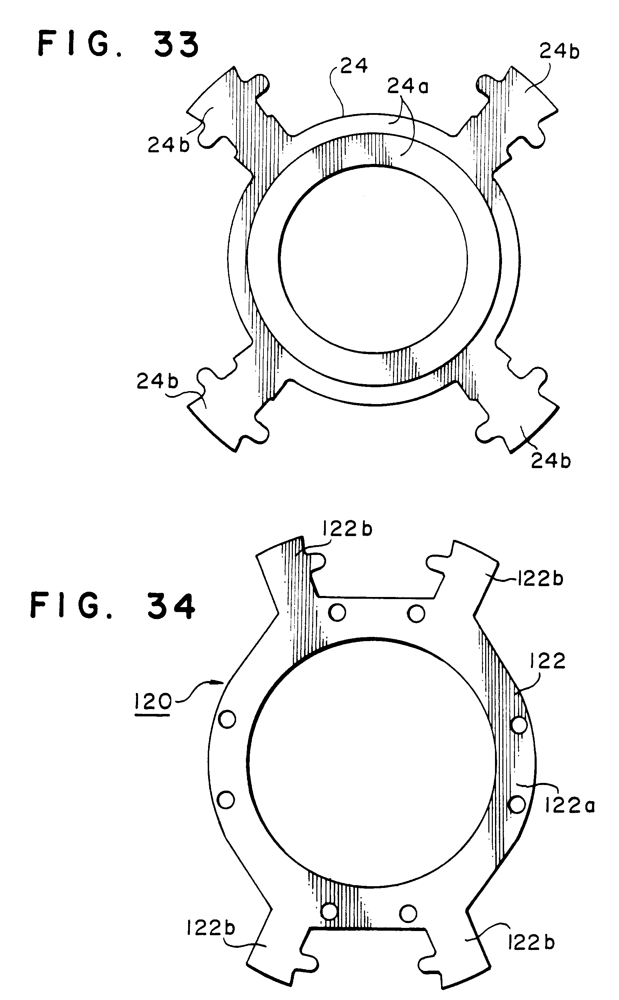

Also, the structures of driven side flywheel 20 of the fourth embodiment are substantially the same as those of driven side flywheel 20 of the third embodiment, and all the explanations made with respect to driven side flywheel 20 of the third embodiment are applicable to driven side flywheel 20 of the fourth embodiment, though the contour of the driven plate 24 of the fourth embodiment (see FIG. 33) is different from that of the third embodiment. In the fourth embodiment, the annular portion 24a of the driven plate 24 slidably engages friction mechanism 140.

As shown in FIG. 28, control plate 120 includes a pair of control plate elements 122 coupled to each other via rivets. As shown in FIG. 34, each of control plate elements 122 includes an annular portion 122a and arms 122b extending radially outwardly from annular portion 122a of control plate 120. Arms 122b detachably engage the air damper mechanism 80, and annular portion 122a slidably engages the friction mechanism 140.

The structures of the first spring mechanism 30 and air damper mechanism 80 including second spring mechanism 40 and the damping mechanism of the fourth embodiment are the same as those of the first spring mechanism 30 and the air damper mechanism 80, respectively, of the third embodiment. Therefore, all the explanations made about the first spring mechanism 30 and the air damper mechanism 80 of the third embodiment are applicable to the respective structures of the fourth embodiment.

As shown in FIG. 35, friction mechanism 140 of the fourth embodiment includes a thrust plate 142 rotatable relative to the the drive side and driven side flywheels 10 and 20 and relative to control plate 120; a thrust lining 144 constructed of abrasive material; and a cone spring 146 generating a thrust force to thereby define the predetermined frictional force Fr of friction mechanism 140. Thrust plate 142, thrust lining 144 and cone spring 146 are interposed between control plate 120 and driven side flywheel 20.

In the fourth embodiment, as shown in FIGS. 26, 27, and 28, a third spring mechanism 50 may be provided as in the case of the third embodiment. In the case where third spring mechanism 50 is provided, the structures of the third spring mechanism 50 of the fourth embodiment are the same as those of the third spring mechanism 50 of the third embodiment, and all the explanations made with respect to the third spring mechanism 50 of the third embodiment are applicable to third spring mechanism 50 of the fourth embodiment.

The characteristic and operation of the flywheel device of the fourth embodiment will be explained.

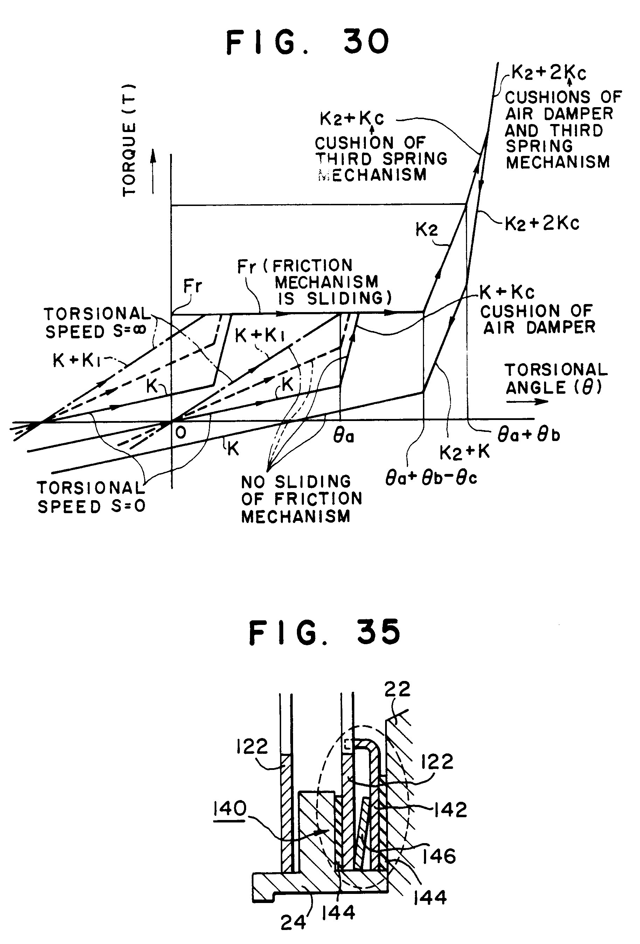

As shown in FIG. 30, because the vibrational system and flywheel device of the fourth embodiment includes friction mechanism 140 which begins to slide when the torque force exceeding the predetermined frictional force Fr of friction mechanism 140 acts on friction mechanism 140, the torque characteristic is partially limited by the line defined by the frictional force Fr on which friction mechanism 140 slides, in comparison with the torque characteristic of the third embodiment shown in FIG. 23. More particularly, the characteristic line starts from point O and changes along a characteristic line positioned between the K characteristic and the K + K1 characteristic up to the torsional angle $\theta$a where cushion 98 of air damper 62 begins to operate. The spring constant K1 of air cushion changes corresponding to the torsional speed between the drive side and driven side flywheels 10 and 20, and up to the torsional angle $\theta$a, friction mechanism 140 does not slide. At the angle $\theta$a, cushion 98 of air damper 82 is brought into contact with the opposing member. Thus, the characteristic line changes from the K + K1 characteristic to the K + Kc characteristic where Kc is a synthetic spring constant of cushion 98 of every air damper 82. When the torsional angle further increases and the force acting on friction mechanism 140 exceeds the predetermined frictional force Fr of friction mechanism 140, friction mechanism 140 begins to momentarily slide and generates a great frictional force. While friction mechanism 140 is sliding, the torque is limited by the friction mechanism 140. When the torsional angle further increases, third spring mechanism 50 is brought into contact with arms 24b of driven plate 24 at the angle $\theta$a + $\theta$b-$\theta$c, where $\theta$b is an angular gap between air damper 82 and driven plate 24, and $\theta$c is an angular deformation of cushion 98. Above the angle $\theta$a + $\theta$b-$\theta$c, third spring mechanism 50 also operates to transmit the torque. Between the torsional angle $\theta$a and $\theta$a + $\theta$b, friction mechanism 140 continues to slide, and control plate 120 rotates relative to driven side flywheel 20. At the torsional angle $\theta$a + $\theta$b, arms 24b of driven plate 22 are brought into contact with air damper 82, and friction mechanism 140 stops its sliding. After that time, air damper 82 and third spring mechanism 50 transmit the torque between drive side flywheel 10 and driven side flywheel 20. When the torsional angle further increases, cushion 54b of spring seat 54 of third spring mechanism 50 is finally brought into contact with the opposing spring seat 54, and both cushion 54b (whose spring constant is Kc) of third spring mechanism 50 and cushion 98 of air damper 82 are elastically deformed to transmit a very large torque.

The engine speed-acceleration transmittance rate characteristic of the flywheel device of the fourth embodiment is the same as that of the third embodiment, and all the explanations made about the characteristic of the flywheel device of the third embodiment are applicable to the characteristic of the flywheel device of the fourth embodiment.

With respect to the advantages of the fourth embodiment, because friction mechanism 140 arranged in series with air damper mechanism 80 is provided, adjustment of the damping force of the torque transmitting path including air damper mechanism 80 and friction mechanism 140 is easily performed through only selecting the frictional force Fr of friction mechanism 140 without changing the damping characteristic of air damper 82. Further. a great damping force is obtained, because the damping includes not only the damping of air damper 82 but also the damping of friction mechanism 140.

In accordance with the present invent on, the following effects are obtained.

Firstly, because the drive side and driven side flywheels 10 and 20 are connected by two kinds of torque transmitting paths arranged parallel to each other, that is, the path including first spring mechanism 30 and the path including second spring mechanism and the viscous damping mechanism, the flywheel device has its vibrational behavior which continuously changes between the two kinds of characteristics. As a result, the change of the vibrational behavior effectively suppresses the amplification of vibration while passing through the resonance speed of the vibrational system.

Secondly, because the change of the vibrational behavior is performed not through the continuously sliding friction mechanism of the prior art but through the viscous damping mechanism which may comprise hydraulic damping mechanism 60 or air damper mechanism 80, the speed variation and torque variation absorbing effect at the standard range of engine speeds is greatly improved. This will be easily understood from the fact that if the drive side and driven side flywheels were fixedly coupled so as not to rotate relative to each other, the acceleration transmittance rate would be 1; therefore, the acceleration transmittance rate of a flywheel device with the continuously sliding friction mechanism provided between the drive side and driven side flywheels would approach 1.

Thirdly, when no momentarily sliding friction mechanism is used as in the cases of the first and third embodiments, no characteristic change due to the abrasion of a friction mechanism and a momentary sticking of such a friction mechanism occur. The damping mechanism does not tend to change its vibrational characteristic, because the characteristic is mainly determined by the volume of the chambers and the diameter of the orifice and because such dimensions of the chambers and the orifice do not change due to elapse of time. As a result, the vibrational characteristic of the flywheel device of the present invention is very stable and reliable. Furthermore, when the momentarily sliding friction mechanism 130 and 140 are used together with the hydraulic damping mechanism 60 or air damping mechanism 80, even if thrust linings 134 and 144 of friction mechanisms 130 and 140, respectively, are worn, the vibrational characteristics of the flywheel device remain stable due to the damping mechanism. In this instance, the provision of friction mechanism 130 prevents an excessively large force from acting on hydraulic damper 62, and the provision of friction mechanism 140 makes easy the adjustment of the damping force of the flywheel device having air damper 82.

**Claims**

1. A system comprising an engine and a torsional damper type flywheel device comprising:

   a drive side flywheel (10) rotatably driven by said engine;

   a driven side flywheel (20) arranged coaxially with respect to the drive side flywheel (10) and rotatable relative to the drive side flywheel (10);

   a first spring mechanism (30) connecting the drive side flywheel (10) and the driven side flywheel (20); and,

   a further damping mechanism arranged in parallel to the first spring mechanism (30) as a vibrational system and connected between said flywheels (10,20), said further damping mechanism including means (40) capable of generating an elastic force and means (60) capable of generating a damping force utilizing a fluid flow, and being adapted so that both a resonance speed of the first spring mechanism (30), the elastic force generating means (40) and the drive side and driven side flywheels (10,20), and a resonance speed of the first spring mechanism (30) and the drive side and driven side flywheels (10,20) are set at a rotational speed range below the idling speed of the engine.

2. A system according to Claim 1, wherein the viscous damping mechanism is a hydraulic damping mechanism (60).

3. A system according to Claim 2, further comprising a friction mechanism (130) arranged in series with the series combination of the second spring mechanism (40) and the hydraulic damping mechanism (60), the series combination of the second spring mechanism (40), the hydraulic damping mechanism (60) and the friction mechanism (130) being arranged parallel to the first spring mechanism (30) as a vibrational system and connected between the drive side and driven side flywheels (10,20).

4. A system according to any one of Claims 2 and 3 wherein the drive side flywheel (20) includes:

   an outer ring (12);

   an inner ring (14) disposed radially inside the outer ring (12); and

   drive plates (16,18) disposed on opposite sides of the outer ring (12) and fixed to the outer ring (12), the inner ring (14) being fixed to one of the drive plates (16).

5. A system according to Claim 4, wherein each of the drive plates (16,18) has first and second openings or slots (17A,17B,19A,19B) formed therein, circumferential ends of the first openings or slots (17A,19A) detachably engaging the first spring mechanism (30) and circumferential ends of the second openings or slots (17B,19B) detachably engaging the series combination of the second spring mechanism (40) and the hydraulic damping mechanism (60).

6. A system according to any one of Claims 2 and 3 wherein the driven side flywheel (20) comprises a flywheel body (22) and a driven plate (24) fixed to the flywheel body (22).

7. A system according to Claim 6, wherein the driven plate (24) comprises an annular portion (24a) and arms (24b) extending radially outwardly from the annular portion (24a), the arms (24b) detachably engaging the first spring mechanism (30) and the series combination of the second spring mechanism (40) and the hydraulic damping mechanism (60).

8. A system according to any one of Claims 2 and 3, wherein the first spring mechanism (30) includes at least one first coil spring (32) and spring seats (34) provided at ends of the first coil spring (32), each of the spring seats (34) including a hard synthetic resin portion (34a), and at least one of the spring seats (34) provided at the ends of the first coil spring (32) including an elastic cushion (34b) fixed to the hard synthetic resin portion (34a) so as to oppose an opposite spring seat (34).

9. A system according to any one of Claims 2 and 3, wherein the second spring mechanism (40) includes at least one second coil spring (42) and spring seats (44) provided at ends of the second coil spring (42), each of the spring seats (44) including a hard synthetic resin portion (44a), and at least one of the spring seats (44) provided at the ends of the second coil spring (42) including an elastic cushion (44b) fixed to the hard synthetic resin portion (44a) so as to oppose an opposite spring seat (44).

10. A system according to any one of Claims 2 and 3, further comprising a first control plate (100) rotatable relative to the drive side and driven side flywheels (10,20) and connecting the second spring mechanism (40) and the hydraulic damping mechanism (60).

11. A system according to Claim 10, wherein the first control plate (100) comprises a pair of first control plate elements (102), each of the first control plate elements (102) including an annular portion (102a) and arms (102b) extending radially outwardly from the annular portion (102a), the arms (102b) of the first control plate elements (102) connecting the second spring mechanism (40) and the hydraulic damping mechanism (60).

12. A system according to any one of Claims 2 and 3, wherein the hydraulic damping mechanism (60) comprises at least one hydraulic damper (62).

13. A system according to Claim 12, wherein the hydraulic damper (62) includes:
first and second outer cylinders (64,66) axially movable relative to each other;
an inner cylinder (68) fixed to the second outer cylinder (66) and axially slidable relative to the first outer cylinder (64), the inner cylinder (68) having an orifice (72) formed therein; and
a diaphragm (70) disposed on a side of the inner cylinder (68) closer to the second cylinder (66), the inner cylinder (68) and the first outer cylinder (64) defining a first chamber (74) therein, and the inner cylinder (68) and the diaphragm (70) defining a second chamber (76) therein, the first and second chambers (74,76) being filled with liquid and communicating with each other through the orifice (72) formed in the inner cylinder (68) so that the orifice (72) generates a viscous damping when the liquid flows through the orifice (72).

14. A system according to Claim 13, wherein the diaphragm (70) and the second outer cylinder (66) define an air chamber (78) therein, the second outer cylinder (66) having a hole (79) formed therein, and the air chamber (78) communicating with the environment through the hole (79) formed in the second outer cylinder (66).

15. A system according to Claim 13, further comprising a return spring (77) disposed in the first chamber (74) and biasing the inner cylinder (68) in a direction away from the first outer cylinder (64).

16. A system according to Claim 15, further comprising a spring seat (75) disposed in the first chamber (74) and supporting one end of the return spring (77).

17. A system according to Claim 16, further comprising a seal member (73) slidable relative to the first outer cylinder (64) and sealing a sliding clearance between the inner cylinder (68) and the first outer cylinder (64), the seal member (73) being held between the inner cylinder (68) and the spring seat (75) which is biased by the return spring (77) toward the inner cylinder (68).

18. A system according to Claim 13, wherein the first and second outer cylinders (64,66) have end portions (64a,66a) having contours similar to spring seats (44) disposed at ends of a coil spring (42) of the second spring mechanism (40).

19. A system according to Claim 10, further comprising a second control plate (110) rotatable relative to the drive side and driven side flywheels (10,20) and relative to the first control plate (100) and disposed between the hydraulic damping mechanism (60) and the friction mechanism (130).

20. A system according to Claim 19, wherein the second control plate (110) comprises a pair of second control plate elements (112), each of the second control plate elements (112) including an annular portion (112a) and arms (112b) extending radially outwardly from the annular portion (112a), the annular portion (112a) slidably engaging the friction mechanism (130) and the arms (112b) detachably engaging the hydraulic damping mechanism (60).

21. A system according to Claim 3, wherein the friction mechanism (130) comprises:
a thrust plate (132) rotatable relative to the drive side and driven side flywheels (10,20);
a thrust lining (134) constructed of abrasive material and coupled to the thrust plate (132); and
a cone spring (136) axially generating a biasing force when it is deformed, wherein the thrust plate (132), the thrust lining (134) and the cone spring (136) are disposed between an annular portion (112a) of a control plate (110) and an annular portion (24a) of a driven plate (24) of the driven side flywheel (20) so that the cone spring (136) generates a predetermined frictional force (Fr) of the friction mechanism (130) when the cone spring (136) is compressed.

22. A system according to Claim 1, further comprising an air damper mechanism (80) disposed between the drive side and driven side flywheels (10,20) and including at least one air damper (82) defining an air chamber (84) therein and having an orifice (86), the air damper mechanism (80) including the second spring mechanism (40) whose spring force is generated from an air cushion of the air chamber (84) of at least one air damper (82) and the air damper mechanism whose damping force is generated by air flow through the orifice (86) of said at least one air damper (82), the size of the orifice (86) being such that, when the air damper (82) strokes at high speed, the air in the air chamber (84) operates so as to generate an air cushion spring having a large spring constant as compared to that when the air damper (82) strokes at a relatively low speed.

23. A system according to Claim 22, further comprising a control plate (120) rotatable relative to the drive side and driven side flywheels (10,20);
a friction mechanism (140) connecting the control plate (120) and the driven side flywheel (20);
and wherein the first spring mechanism (30) connects the drive side flywheel (10) and the control plate (120), and
the air damper mechanism (80) connects the drive side flywheel (10) and the control plate (120).

24. A system according to any one of Claims 22 and 23, wherein the drive side flywheel (10) includes:
an outer ring (12);
an inner ring (14) disposed radially inside the outer ring (12); and
drive plates (16,18) disposed on opposite sides of the outer ring (12) and fixed to the outer ring (12), the inner ring (14) being fixed to one of the drive plates (16).

25. A system according to Claim 24, wherein each of the drive plates (16,18) has first and second openings or slots (17A,17B,19A,19B,17,19) formed therein, circumferential ends of the first openings or slots (17A,19A,17,19) detachably engaging the air damper mechanism (80).

26. A system according to any one of Claims 22 and 23, wherein the driven side flywheel (20) comprises a flywheel body (22) and a driven plate (24) fixed the flywheel body (22).

15

27. A system according to Claim 26, wherein the driven plate (24) comprises an annular portion (24a) and arms (24b) extending radially outwardly from the annular portion (24a), the arms (24b) detachably engaging the air damper mechanism (80).

28. A system according to any one of Claims 22 and 23, wherein the first spring mechanism (30) includes at least one first coil spring (32), the first coil spring (32) being housed in the air chamber (84) of the air damper (82) and also operating as a return spring of the air damper (82).

29. A system according to any one of Claims 22 and 23, wherein the air damper (82) comprises:

an outer cylinder (88) including an end portion (34a) and a cylindrical portion (88a);

an inner cylinder (90) axially slidable relative to the outer cylinder (88) and defining the air chamber (84) therein in cooperation with the outer cylinder (88), the inner cylinder (90) having an end portion (34a) and a cylindrical portion (90a); and

a seal ring (92) disposed between the cylindrical portion (88a) of the outer cylinder (88) and the cylindrical portion (90a) of the inner cylinder (90).

30. A system according to Claim 29, wherein the inner cylinder (90) has a groove (94) formed in its cylindrical portion (90a) which circumferentially extends over the entire circumference of the cylindrical portion (90a) of the inner cylinder (90), the seal ring (92) being fitted in the groove (94).

31. A system according to Claim 30, wherein the seal ring (92) is slidably pressed against an inside surface of the cylindrical portion (88a) of the outer cylinder (88) and loosely contacts an outside surface of the cylindrical portion (90a) of the inner cylinder (90).

32. A system according to Claim 30, wherein there is a gap (g) between the seal ring (92) and at least one side surface of the groove (94).

33. A system according to Claim 29, further comprising:

an axially extending pillar (96) formed in at least one of the end portion (34a) of the outer cylinder (88) and the end portion (34a) of the inner cylinder (90); and

a cushion (98) constructed of elastic material and fixed to an end of the pillar (96).

34. A system according to Claim 29, wherein the end portion (34a) of the outer cylinder (88) and the end portion (34a) of the inner cylinder (90) constitute spring seats (34) to be disposed at ends of a first coil spring (32) of the first spring mechanism (30).

35. A system according to any one of Claims 22 and 23, further comprising a third spring mechanism (50) arranged parallel to the first spring mechanism (30) and parallel to the series combination of the second spring mechanism (40) and the air damper mechanism, the third spring mechanism (50) connecting the drive side and driven side flywheels (10,20) with a predetermined gap ($\theta$1) therebetween.

36. A system according to Claim 35, wherein the third spring mechanism (50) includes at least one third coil spring (52) and spring seats (54) provided at ends of the third coil spring (52), each of the spring seats (54) including a hard synthetic resin portion (54a), and at least one of the spring seats (54) provided at the ends of the third coil spring (52) including an elastic cushion (54b) fixed to the hard synthetic resin portion (54a) so as to oppose an opposite spring seat (54).

37. A system according to Claim 35, wherein the drive side flywheel (10) includes:

an outer ring (12);

an inner ring (14) disposed radially inside the outer ring (12); and

drive plates (16,18) disposed on opposite sides of the outer ring (12) and fixed to the outer ring (12), the inner ring (14) being fixed to one of the drive plates (16), each of the drive plates (16,18) having openings or slots (17,19) formed therein and circumferential ends of the openings or slots (17,19) detachably engaging the air damper mechanism (80) and the third spring mechanism (50).

38. A system according to Claim 35, wherein the driven side flywheel (20) comprises a flywheel body (22) and a driven plate (24) fixed to the flywheel body (22), the driven plate (24) including an annular portion (24a) and arms (24b) extending radially outwardly from the annular portion (24a), the arms (24b) detachably engaging the air damper mechanism (80) and the third spring mechanism (50).

39. A system according to Claim 35, wherein three air dampers (82) and three third coil springs (52) are arranged one after the other in a circumferential direction of the flywheel device.

16

**40.** A system according to Claim 27, wherein the driven plate (24) includes an annular portion (24a) and arms (24b) extending radially outwardly from the annular portion (24a), the annular portion (24a) slidably contacting the friction mechanism (140) and the arms (24b) detachably engaging the air damper mechanism (80).

**41.** A system according to Claim 23, wherein the control plate (120) comprises a pair of control plate elements (122) coupled to each other, each of the control plate elements (122) including an annular portion (122a) and arms (122b) extending radially outwardly from the annular portion (122a), the arms (122b) detachably engaging the air damper mechanism (80) and the annular portion (122a) slidably engaging the friction mechanism (140).

**42.** A system according to Claim 23, wherein the friction mechanism (140) comprises:

a thrust plate (142) rotatable relative to the drive side and driven side flywheels (10,20) and relative to the control plate (120);

a thrust lining (144) constructed of abrasive material and coupled to the thrust plate (142); and

a cone spring which generates a thrust force and defines a predetermined frictional force (Fr) of the friction mechanism (140), wherein the thrust plate (142), the thrust lining (144) and the cone spring (146) are interposed between the control plate (120) and the driven side flywheel (20).

**43.** A system according to Claim 35, wherein the driven side flywheel (20) comprises a flywheel body (22) and a driven plate (24) fixed to the flywheel body (22), the driven plate (24) including an annular portion (24a) and arms (24b) extending radially outwardly from the annular portion (24a), the arms (24b) detachably engaging the air damper mechanism (80) and the third spring mechanism (50) and the annular portion (24a) slidably engaging the friction mechanism (140).

**Patentansprüche**

**1.** Ein System, das einen Motor sowie eine Schwungradvorrichtung vom Drehschwingungsdämpfertyp einschließt und umfaßt:

- eine antriebsseitige, von dem genannten Motor in Umdrehung versetzte Schwungscheibe (10);
- eine abtriebsseitige Schwungscheibe (20), die mit Bezug zur antriebsseitigen Schwungscheibe (10) koaxial angeordnet und relativ zur antriebsseitigen Schwungscheibe (10) drehbar ist;
- einen ersten Federmechanismus (30), der die antriebsseitige Schwungscheibe (10) sowie die abtriebsseitige Schwungscheibe (20) verbindet; und
- einen weiteren Dämpfungsmechanismus, der als ein Schwingungssystem parallel zum ersten Federmechanismus (30) angeordnet sowie zwischen die genannten Schwungscheiben (10, 20) geschaltet ist, wobei dieser weitere Dämpfungsmechanismus Einrichtungen (40), die imstande sind, eine elastische Kraft zu erzeugen, und Einrichtungen (60), die imstande sind, unter Ausnutzung einer Fluidströmung eine Dämpfungskraft zu erzeugen, enthält und derart eingerichtet ist, daß sowohl eine Resonanzdrehzahl des ersten Federmechanismus (30), der die elastische Kraft erzeugenden Einrichtungen (40) und der antriebs- sowie abtriebsseitigen Schwungscheibe (10, 20)- als auch eine Resonanzdrehzahl des ersten Federmechanismus (30) und der antriebs- sowie abtriebsseitigen Schwungscheibe (10, 20) auf einen Drehzahlbereich unter der Leerlaufdrehzahl des Motors eingestellt sind.

**2.** Ein System nach Anspruch 1, in welchem der viskose Dämpfungsmechanismus ein Flüssigkeitsdämpfungsmechanismus (60) ist.

**3.** Ein System nach Anspruch 2, das ferner einen in Reihe mit der Reihenkombination aus dem zweiten Federmechanismus (40) sowie dem Flüssigkeitsdämpfungsmechanismus (60) angeordneten Reibungsmechanismus (130) umfaßt, wobei die Reihenkombination aus dem zweiten Federmechanismus (40), dem Flüssigkeitsdämpfungsmechanismus (60) und dem Reibungsmechanismus (130) als ein Schwingungssystem zum ersten Federmechanismus (30) parallel angeordnet und zwischen die antriebs- sowie abtriebsseitige Schwungscheibe (10, 20) geschaltet sind.

**4.** Ein System nach einem der Ansprüche 2 und 3, in welchem die antriebsseitige Schwungscheibe (10) umfaßt:

- einen Außenring (12);
- einen radial innerhalb des Außenringes (12) angeordneten Innenring (14); und
- an entgegengesetzten Seiten des Außenringes (12) angeordnete sowie am Außenring (12) befestigte treibende Platten

17

(16, 18), wobei der Innenring (14) an einer der treibenden Platten (16) fest angebracht ist.

5. Ein System nach Anspruch 4, in welchem jede der treibenden Platten (16, 18) darin ausgebildete erste und zweite Öffnungen oder Aussparungen (17A, 17B, 19A, 19B) besitzen, wobei in Umfangsrichtung liegende Enden der ersten Öffnungen oder Aussparungen (17A, 19A) lösbar mit dem ersten Federmechanismus (30) in Anlage und in Umfangsrichtung liegende Enden der zweiten Öffnungen oder Aussparungen (17B, 19B) mit der Reihenkombination aus dem zweiten Federmechanismus (40) sowie dem Flüssigkeitsdämpfungsmechanismus (60) in Anlage sind.

6. Ein System nach einem der Ansprüche 2 und 3, in welchem die abtriebsseitige Schwungscheibe (20) einen Schwungscheibenkörper (22) und eine am Schwungscheibenkörper (22) befestigte getriebene Platte (24) umfaßt.

7. Ein System nach Anspruch 6, in welchem die getriebene Platte (24) ein Ringstück (24a) sowie vom Ringstück (24a) radial auswärts sich erstreckende Arme (24b) umfaßt, wobei die Arme (24b) lösbar mit dem ersten Federmechanismus (30) sowie der Reihenkombination aus dem zweiten Federmechanismus (40) und dem Flüssigkeitsdämpfungsmechanismus (60) in Anlage sind.

8. Ein System nach einem der Ansprüche 2 und 3, in welchem der erste Federmechanismus (30) wenigstens eine erste Schraubenfeder (32) sowie an den Enden der ersten Schraubenfeder (32) befindliche Federsitze (34) umfaßt, wobei jeder der Federsitze (34) ein hartes Kunstharzteil (34a) enthält und wenigstens einer der an den Enden der ersten Schraubenfeder (32) befindlichen Federsitze (34) ein elastisches Polster (34b) besitzt, das an dem harten Kunstharzteil (34a) in Gegenüberlage zu einem entgegengesetzten Federsitz (34) befestigt ist.

9. Ein System nach einem der Ansprüche 2 und 3, in welchem der zweite Federmechanismus (40) wenigstens eine zweite Schraubenfeder (42) sowie an den Enden der zweiten Schraubenfeder (42) befindliche Federsitze (44) umfaßt, wobei jeder der Federsitze (44) ein hartes Kunstharzteil (44a) enthält und wenigstens einer der an den Enden der zweiten Schraubenfeder (42) befindlichen Federsitze (44) ein elastisches Polster (44a) besitzt, das an dem harten Kunstharzteil (44a) in Gegenüberlage zu einem entgegengesetzten Federsitz (44) befestigt ist.

10. Ein System nach einem der Ansprüche 2 und 3, das ferner eine Regelplatte (100) umfaßt, die relativ zur antriebs- sowie abtriebsseitigen Schwungscheibe (10, 20) drehbar ist und den zweiten Federmechanismus (40) sowie den Flüssigkeitsdämpfungsmechanismus (60) verbindet.

11. Ein System nach Anspruch 10, in welchem die erste Regelplatte (100) ein Paar von ersten Regelplattengliedern (102) umfaßt, wobei jedes der ersten Regelplattenglieder (102) ein Ringstück (102a) sowie von dem Ringstück (102a) radial auswärts sich erstreckende Arme (102b) besitzt und die Arme (102b) der ersten Regelplattenglieder (102) den zweiten Federmechanismus (40) sowie den Flüssigkeitsdämpfungsmechanismus (60) verbinden.

12. Ein System nach einem der Ansprüche 2 und 3, in welchem der Flüssigkeitsdämpfungsmechanismus (60) wenigstens einen hydraulischen Dämpfer (62) umfaßt.

13. Ein System nach Anspruch 12, in welchem der hydraulische Dämpfer (62) umfaßt:
    - erste und zweite Außenzylinder (64, 66), die relativ zueinander axial bewegbar sind;
    - einen am zweiten Außenzylinder (66) befestigten und relativ zum ersten Außenzylinder (64) axial verschiebbaren Innenzylinder (68), wobei der Innenzylinder (68) eine in diesem ausgebildete Blendenöffnung (72) besitzt; und
    - eine an einer dem zweiten Außenzylinder (66) nähergelegenen Seite des Innenzylinders (68) angeordnete Membran (70), wobei der Innenzylinder (68) sowie der erste Außenzylinder (64) zwischen sich eine erste Kammer (74) begrenzen und der Innenzylinder (68) sowie die Membran (70) zwischen sich eine zweite Kammer (76) begrenzen und die erste sowie zweite Kammer (74, 76) mit einer Flüssigkeit gefüllt sind und miteinander durch die im Innenzylinder (68) ausgebildete Blendenöffnung (72) in Verbindung stehen, so daß die Blendenöffnung (72), wenn die Flüssigkeit durch die Blendenöffnung (72) fließt, eine viskose Dämpfung hervorruft.

14. Ein System nach Anspruch 13, in welchem die Membran (70) und der zweite Außenzylinder (66) zwischen sich eine Luftkammer (78) begrenzen, wobei der zweite Außenzylinder (66) ein in diesem ausgebildetes Loch (79) besitzt und die Luftkammer (78) mit der Umgebung durch das im zweiten Außenzylinder (66) ausgebildete Loch (79) in Verbindung steht.

15. Ein System nach Anspruch 13, das ferner eine Rückstellfeder (77) umfaßt, die in der ersten Kammer (74) angeordnet ist und den Innenzylinder (68) in einer Richtung vom ersten Außenzylinder (64) weg belastet.

16. Ein System nach Anspruch 15, das ferner einen Federsitz (75) umfaßt, der in der ersten Kammer (74) angeordnet ist und das eine Ende der Rückstellfeder (77) abstützt.

17. Ein System nach Anspruch 16, das ferner ein Dichtungselement (73) umfaßt, das mit Bezug zum ersten Außenzylinder (64) verschiebbar ist und einen sich verschiebenden Spalt zwischen dem Innenzylinder (68) sowie dem ersten Außenzylinder (64) abdichtet, wobei das Dichtungselement (73) zwischen dem Innenzylinder (68) und dem Federsitz (75) gehalten ist, der durch die Rückstellfeder (77) zum Innenzylinder (68) hin gedrückt wird.

18. Ein System nach Anspruch 13, in welchem der erste und zweite Außenzylinder (64, 66) Stirnteile (64a, 66a) aufweisen, die zu den an den Enden einer Schraubenfeder (42) des zweiten Federmechanismus (40) angeordneten Federsitzen (44) gleichartige Profile haben.

19. Ein Systsem nach Anspruch 10, das ferner eine zweite Regelplatte (110) umfaßt, die relativ zur antriebs- sowie abtriebsseitigen Schwungscheibe (10, 20) und relativ zur ersten Regelplatte (100) drehbar sowie zwischen dem Flüssigkeitsdämpfungsmechanismus (60) und dem Reibungsmechanismus (130) angeordnet ist.

20. Ein System nach Anspruch 19, in welchem die zweite Regelplatte (110) ein Paar von zweiten Regelplattengliedern (112) umfaßt, wobei jedes der zweiten Regelplattenglieder (112) ein Ringstück (112a) sowie von dem Ringstück (112a) radial auswärts sich erstreckende Arme (112b) besitzt, das Ringstück (112a) verschiebbar mit dem Reibungsmechanismus (130) in Anlage ist und die Arme (112b) lösbar am Flüssigkeitsdämpfungsmechanismus (60) anliegen.

21. Ein System nach Anspruch 3, in welchem der Reibungsmechanismus (130) umfaßt:
    - eine mit Bezug zur antriebs- sowie zur abtriebsseitigen Schwungscheibe (10, 20) drehbare Druckplatte (132);
    - einen aus einem Reibmaterial gebildeten und mit der Druckplatte (132) verbundenen Druckbelag (134); und
    - eine Kegelfeder (136), die bei ihrer Verformung eine axial gerichtete Druckkraft erzeugt, wobei die Druckplatte (132), der Druckbelag (134) und die Kegelfeder (136) zwischen einem Ringstück (112a) einer Regelplatte (110) sowie einem Ringstück (24a) einer getriebenen Platte (24) der abtriebsseitigen Schwungscheibe (20) angeordnet sind, so daß die Kegelfeder (136) eine vorbestimmte Reibungskraft (Fr) des Reibungsmechanismus (130), wenn die Kegelfeder (136) komprimiert wird, erzeugt.

22. Ein System nach Anspruch 1, das ferner einen Luftdämpfungsmechanismus (80) umfaßt, der zwischen der antriebs- sowie der abtriebsseiten Schwungscheibe (10, 20) angeordnet ist und wenigstens einen Luftdämpfer (82) enthält, der in sich eine Luftkammer (84) abgrenzt und eine Blendenöffnung (86) hat, wobei der Luftdämpfungsmechanismus (80) den Zweiten Federmechanismus (40) einschließt, dessen Federkraft von einem Luftkissen der Luftkammer (84) von wenigstens einem Luftdämpfer (82) und dem Luftdämpfungsmechanismus, dessen Dämpfungskraft durch die Luftströmung durch die Blendenöffnung (86) des genannten wenigstens einen Luftdämpfers (82) hervorgerufen wird, erzeugt wird, wobei die Größe der Blendenöffnung (86) derart ist, daß, wenn der Luftdämpfer (82) mit hoher Geschwindigkeit hin- und hergeht, die Luft in der Luftkammer (84) so arbeitet, um eine Luftkissenfeder zu bilden, die eine große Federkonstante im Vergleich mit derjenigen hat, wenn der Luftdämpfer (82) mit einer relativ niedrigen Geschwindigkeit hin- und hergeht.

23. Ein System nach Anspruch 22, das ferner umfaßt:
    - eine Regelplatte (120), die mit Bezug zur antriebs- sowie abtriebsseitigen Schwungscheibe (10, 20) drehbar ist;
    - einen Reibungsmechanismus (140), der die Regelplatte (120) sowie die abtriebsseitige Schwungscheibe (20) verbindet;
    - wobei der erste Federmechanismus (30) die antriebsseitige Schwungscheibe (10) sowie die Regelplatte (120) verbindet;

sowie
- der Luftdämpfungsmechanismus (80) die antriebsseitige Schwungscheibe (10) sowie die Regelplatte (120) verbindet.

24. Ein System nach einem der Ansprüche 22 und 23, in welchem die antriebsseitige Schwungscheibe (10) umfaßt:
- einen Außenring (12);
- einen radial innerhalb des Außenringes (12) angeordneten Innenring (14); und
- an entgegengesetzten Seiten des Außenringes (12) angeordnete sowie am Außenring (12) befestigte treibende Platten (16, 18), wobei der Innenring (14) an der einen der treibenden Platten (16) fest angebracht ist.

25. Ein System nach Anspruch 24, in welchem jede der treibenden Platten (16, 18) darin ausgebildete erste und zweite Öffnungen oder Aussparungen (17A, 17B, 19A, 19B, 17, 19) besitzt, wobei in Umfangsrichtung liegende Enden der ersten Öffnungen oder Aussparungen (17A, 19A, 17, 19) lösbar mit dem Luftdämpfungsmechanismus (80) in Anlage sind.

26. Ein System nach einem der Ansprüche 22 und 23, in welchem die abtriebsseitige Schwungscheibe (20) einen Schwungscheibenkörper (22) sowie eine am Schwungscheibenkörper (22) befestigte getriebene Platte (24) umfaßt.

27. Ein System nach Anspruch 26, in welchem die getriebene Platte (24) ein Ringstück (24a) und vom Ringstück (24a) radial auswärts sich erstreckende Arme (24b) umfaßt, wobei die Arme (24b) lösbar mit dem Luftdämpfungsmechanismus (80) in Anlage sind.

28. Ein System nach einem der Ansprüche 22 und 23, in welchem der erste Federmechanismus (30) wenigstens eine erste Schraubenfeder (32) umfaßt, welche erste Schraubenfeder (32) in der Luftkammer (84) des Luftdämpfers (82) aufgenommen ist und auch als eine Rückstellfeder des Luftdämpfers (82) arbeitet.

29. Ein System nach einem der Ansprüche 22 und 23, in welchem der Luftdämpfer (82) umfaßt:
- einen Außenzylinder (88), der ein Stirnteil (34a) sowie einen Zylindermantel (88a) enthält;
- einen Innenzylinder (90), der relativ zum Außenzylinder (88) axial verschiebbar ist und im Zusammenwirken mit dem Außenzylinder (88) im Innenzylinder die Luftkammer (84) abgrenzt, wobei der Innenzylinder (90) ein Stirnteil (34a) sowie einen Zylindermantel (90a) besitzt; und
- einen zwischen dem Zylindermantel (88a) des Außenzylinders (88) sowie dem Zylindermantel (90a) des Innenzylinders (90) angeordneten Dichtungsring (92).

30. Ein System nach Anspruch 29, in welchem der Innenzylinder (90) eine in seinem Zylindermantel (90a) ausgebildete Kehle (94) besitzt, die sich in Umfangsrichtung über den gesamten Umfang des Zylindermantels (90a) des Innenzylinders (90) erstreckt, wobei der Dichtungsring (92) in die Kehle (94) eingesetzt ist.

31. Ein System nach Anspruch 30, in welchem der Dichtungsring (92) verschiebbar gegen eine innenseitige Fläche des Zylindermantels (88a) des Außenzylinders (88) angepreßt wird und lose eine außenseitige Fläche des Zylindermantels (90a) des Innenzylinders (90) berührt.

32. Ein System nach Anspruch 30, in welchem ein Spalt (g) zwischen dem Dichtungsring (92) und wenigstens einer Seitenfläche der Kehle (94) vorhanden ist.

33. Ein System nach Anspruch 29, das ferner umfaßt:
- einen axial sich erstreckenden Schaft (96), der an wenigstens einem aus dem Stirnteil (34a) des Außenzylinders (88) und dem Stirnteil (34a) des Innenzylinders (90) ausgebildet ist; und
- ein Polster (96), das aus einem elastischen Material gefertigt sowie an einem Ende des Schaftes (96) befestigt ist.

34. Ein System nach Anspruch 29, in welchem das Stirnteil (34a) des Außenzylinders (88) und das Stirnteil (34a) des Innenzylinders (90) Federsitze (34) bilden, die an Enden der ersten Schraubenfeder (32) des ersten Federmechanismus (30) anzuordnen sind.

35. Ein System nach einem der Ansprüche 22 und 23, das ferner einen dritten Federmechanismus (50) umfaßt, der parallel zum ersten Federmechanismus (30) sowie parallel zu der Reihenkombination aus dem zweiten Federmechanismus (40) und dem Luftdämpfungsmechanismus angeordnet ist, wobei der dritte Federmechanismus (50) die antriebs- sowie abtriebsseitige Schwungscheibe (10, 20) mit einem vorbestimmten Zwischenraum ($\theta$1) zwischen diesen verbindet.

**36.** Ein System nach Anspruch 35, in welchem der dritte Federmechanismus (50) wenigstens eine dritte Schraubenfeder (52) sowie an Enden der dritten Schraubenfeder (52) vorgesehene Federsitze (54) umfaßt, wobei jeder Federsitz (54) ein hartes Kunstharzteil (54a) und wenigstens einer der an den Enden der dritten Schraubenfeder (52) befindlichen Federsitze (54) ein elastisches Polster (54b) enthält, welches an dem harten Kunstharzteil (54a) in Gegenüberlage zu einem entgegengesetzten Federsitz (54) befestigt ist.

**37.** Ein System nach Anspruch 35, in welchem die antriebsseitige Schwungscheibe (10) umfaßt:
- einen Außenring (12);
- einen radial innerhalb des Außenringes (12) angeordneten Innenring (14); und
- an entgegengesetzten Seiten des Außenringes (12) angeordnete sowie am Außenring (12) befestigte treibende Platten (16, 18), wobei der Innenring (14) an einer der treibenden Platten (16) fest angebracht ist, jede der treibenden Platten (16, 18) darin ausgebildete Öffnungen oder Aussparungen (17, 19) besitzt und in Umfangsrichtung liegende Enden der Öffnungen oder Aussparungen (17, 19) lösbar mit dem Luftdämpfungsmechanismus (80) sowie dem dritten Federmechanismus (50) in Anlage sind.

**38.** Ein System nach Anspruch 35, in welchem die abtriebsseitige Schwungscheibe (20) einen Schwungscheibenkörper (22) sowie eine getriebene, am Schwungscheibenkörper (22) befestigte Platte (24) umfaßt, die getriebene Platte (24) ein Ringstück (24a) sowie vom Ringstück (24a) radial auswärts sich erstreckende Arme (24b) besitzt und die Arme (24b) lösbar mit dem Luftdämpfungsmechanismus (80) sowie dem dritten Federmechanismus (50) in Anlage sind.

**39.** Ein System nach Anspruch 35, in welchem drei Luftdämpfer (82) und drei dritte Schraubenfedern (52) nacheinander in einer Umfangsrichtung der Schwungradvorrichtung angeordnet sind.

**40.** Ein System nach Anspruch 27, in welchem die getriebene Platte (24) ein Ringstück (24a) sowie vom Ringstück (24a) radial auswärts sich erstreckende Arme (24b) umfaßt, wobei das Ringstück (24a) verschiebbar den Reibungsmechanismus (140) berührt und die Arme (24b) lösbar mit dem Luftdämpfungsmechanismus (80) in Anlage sind.

**41.** Ein System nach Anspruch 23, in welchem die Regelplatte (120) ein Paar von untereinander verbundenen Regelplattengliedern (122) umfaßt, wobei jedes der Regelplattenglieder (122) ein Ringstück (122a) sowie vom Ringstück (122a) radial auswärts sich erstreckende Arme (122b) besitzt und die Arme (122b) lösbar mit dem Luftdämpfungsmechanismus (80) sowie das Ringstück (122a) verschiebbar mit dem Reibungsmechanismus (140) in Anlage sind.

**42.** Ein System nach Anspruch 23, in welchem der Reibungsmechanismus (140) umfaßt:
- eine mit Bezug zur antriebs- sowie zur abtriebsseitigen Schwungscheibe (10, 20) und mit Bezug zur Regelplatte (120) drehbare Druckplatte (142);
- einen aus einem Reibmaterial gefertigten sowie mit der Druckplatte (142) verbundenen Druckbelag (144); und
- eine Kegelfeder, die eine Druckkraft erzeugt sowie eine vorbestimmte Reibungskraft (Fr) des Reibungsmechanismus (140) festsetzt, wobei die Druckplatte (142), der Druckbelag (144) und die Kegelfeder (146) zwischen die Regelplatte (120) und die abtriebsseitige Schwungscheibe (20) eingesetzt sind.

**43.** Ein System nach Anspruch 35, in welchem die abtriebsseitige Schwungscheibe (20) einen Schwungscheibenkörper (22) sowie eine getriebene, am Schwungscheibenkörper (22) befestigte Platte (24) umfaßt, die getriebene Platte (24) ein Ringstück (24a) sowie vom Ringstück (24a) radial auswärts sich erstreckende Arme (24b) besitzt, die Arme (24b) lösbar mit dem Luftdämpfungsmechanismus (80) sowie dem dritten Federmechanismus (50) in Anlage sind und das Ringstück (24a) verschiebbar mit dem Reibungsmechanismus (140) in Anlage ist.

**Revendications**

**1.** Système comprenant un moteur et un dispositif à volant d'inertie du type à amortisseur de torsion comportant:

un volant d'inertie du côté d'entraînement (10) entraîné en rotation par le dit moteur;

un volant d'inertie du côté entraîné (20) disposé coaxialement par rapport au volant d'inertie du côté d'entraînement (10) et pouvant tourner par rapport au volant d'inertie du côté d'entraînement (10);

un premier mécanisme à ressort (30) reliant le volant d'inertie du côté d'entraînement (10) et le volant d'inertie du côté entraîné (20);

et

un autre mécanisme d'amortissement disposé parallèlement au premier mécanisme à ressort (30) en tant que système vibratoire et relié entre lesdits volants d'inertie (10, 20), ledit mécanisme d'amortissement supplémentaire comportant un moyen (40) capable de produire une force élastique et un moyen (60) capable de produire une force d'amortissement faisant appel à un écoulement de fluide, et étant adapté à ce qu'une vitesse de résonance du premier mécanisme à ressort (30), du moyen générateur de force élastique (40) et des volants d'inertie du côté d'entraînement et du côté entraîné (10, 20), et à ce qu'une vitesse de résonance du premier mécanisme à ressort (30) et des volants d'inertie du côté d'entraînement et du côté entraîné (10, 20), soient toutes deux fixées dans une gamme de vitesses de rotation inférieure à la vitesse de ralenti du moteur.

2. Système selon la revendication 1, dans lequel le mécanisme d'amortissement visqueux est un mécanisme d'amortissement hydraulique (60).

3. Système selon la revendication 2, comprenant en outre un mécanisme de frottement (130) disposé en série avec la combinaison en série du second mécanisme à ressort (40) et du mécanisme d'amortissement hydraulique (60), la combinaison en série du second mécanisme à ressort (40), du mécanisme d'amortissement hydraulique (60) et du mécanisme de frottement (130) étant disposée parallèlement au premier mécanisme à ressort (30) en tant que système vibratoire et étant reliée entre les volants d'inertie du côté d'entraînement et du côté entraîné (10, 20).

4. Système selon l'une quelconque des revendications 2 et 3, dans lequel le volant d'inertie du côté d'entraînement (20) comporte:

une bague extérieure (12);

une bague intérieure (14) disposée radialement à l'intérieur de la bague extérieure (12); et

des plateaux d'entraînement (16, 18) disposés de part et d'autre de la bague extérieure (12) et fixés à la bague (12), la bague intérieure (14) étant fixée à l'un des plateaux d'entraînement (16).

5. Système selon la revendication 4, dans lequel chacun des plateaux d'entraînement (16,18) présente une première et une seconde ouvertures ou échancrures (17A, 17B, 19A, 19B) formées dans celui-ci, les extrémités circonférentielles des premières ouvertures ou échancrures (17A, 19A) s'engageant de façon amovible sur le premier mécanisme à ressort (30) et les extrémités circonférentielles des secondes ouvertures ou échancrures (17B, 19B) s'engageant de façon amovible sur la combinaison en série du second mécanisme à ressort (40) et du mécanisme d'amortissement hydraulique (60).

6. Système selon l'une quelconque des revendications 2 et 3, dans lequel le volant d'inertie du côté entraîné (20) comprend un corps de volant d'inertie (22) et un plateau entraîné (24) fixé au corps de volant d'inertie (22).

7. Système selon la revendication 6, dans lequel le plateau entraîné (24) comprend une partie annulaire (24a) et des bras (24b) s'étendant radialement vers l'extérieur de la partie annulaire (24a), les bras (24b) s'engageant de façon amovible sur le premier mécanisme à ressort (30) et la combinaison en série du second mécanisme à ressort (40) et du mécanisme d'amortissement hydraulique (60).

8. Système selon l'une quelconque des revendication 2 et 3, dans lequel le premier mécanisme à ressort (30) comprend au moins un ressort à boudin (32) et des sièges de ressort (34) disposés aux, extrémités du premier ressort à boudin (32), chacun des sièges de ressort (34) comportant une partie en résine synthétique dure (34a), et au moins l'un des sièges de ressort (34) disposé aux extrémités du premier ressort à boudin (32) comportant un butoir élastique (34b) fixé à la partie en résine synthétique dure (34a) de façon à s'opposer à un siège de ressort opposé (34).

9. Système selon l'une quelconque des revendications 2 et 3, dans lequel le second mécanisme à ressort (40) comporte au moins un second ressort à boudin (42) et des sièges des ressort (44) disposés aux extrémités du second ressort à boudin (42), chacun des sièges de ressort (44) comportant une partie en résine synthétique dure (44a), et au moins l'un des sièges de ressort (44) disposés aux extrémités du second ressort à boudin (42) comportant un butoir élastique (44b) fixé à la partie en résine synthétique dure (44a) de façon à s'opposer à un siège de ressort opposé (44).

10. Système selon l'une quelconque des revendications 2 et 3, comprenant en outre un premier plateau de commande (100) pouvant tourner par rapport aux volants d'inertie du côté d'entraînement et du côté entraîné (10, 20) et reliant le second mécanisme à ressort (40) et le mécanisme d'amortissement hydraulique (60).

11. Système selon la revendication 10, dans lequel le premier plateau de commande (100) comprend une paire de premiers éléments de plateau de commande (102), chacun des premiers éléments de plateau de commande (102) comportant une partie annulaire (102a) et des bras (102b) s'étendant radialement vers l'extérieur de la partie annulaire (102a), les bras (102b) des premiers éléments de plateau de commande (102) reliant le second mécanisme à ressort (40) et le mécanisme d'amortissement hydraulique (60).

12. Système selon l'une quelconque des revendications 2 et 3, dans lequel le mécanisme d'amortissement hydraulique (60) comprend au moins un amortisseur hydraulique (62).

13. Système selon la revendication 12, dans lequel l'amortisseur hydraulique (62) comporte:
    un premier et un second cylindres extérieurs (64, 66) mobiles axialement l'un par rapport à l'autre;
    un cylindre intérieur (68) fixé au second cylindre extérieur (66) et pouvant coulisser axialement par rapport au premier cylindre extérieur (64), le cylindre intérieur (68) ayant un orifice (72) formé dans celui-ci;
    un diaphragme (70) disposé sur un côté du cylindre intérieur (68) plus près du second cylindre (66), le cylindre intérieur (68) et le premier cylindre extérieur (64) définissant dans ceux-ci une première chambre (74), et le cylindre intérieur (68) et le diaphragme (70) définissant dans ceux-ci une seconde chambre (76), la première et la seconde chambres (74, 76) étant remplies d'un liquide et communiquant l'une avec l'autre par l'intermédiaire de l'orifice (72) ménagé dans le cylindre intérieur (68) de façon à ce que l'orifice (72) produise un amortissement visqueux lorsque le liquide s'écoule par l'orifice (72).

14. Système selon la revendication 13, dans lequel le diaphragme (70) et le second cylindre extérieur (66) définissent une chambre à air (78) dans ceux-ci, le second cylindre extérieur (66) ayant un trou (79) ménagé dans celui-ci, et la chambre à air (78) communiquant avec l'environnement par l'intermédiaire du trou (79) ménagé dans le second cylindre extérieur (66).

15. Système selon la revendication 13, comprenant en outre un ressort de rappel (77) disposé dans la première chambre (74) et sollicitant le cylindre intérieur (8) dans une direction l'écartant du premier cylindre extérieur (64).

16. Système selon la revendication 15, comprenant en outre un siège de ressort (75) disposé dans la première chambre (74) et soutenant une extrémité du ressort de rappel (77).

17. Système selon la revendication 16, comprenant en outre un élément d'étanchéité (73) pouvant coulisser par rapport au premier cylindre extérieur (64) et fermant de façon étanche un interstice de coulissement entre le cylindre intérieur (68) et le premier cylindre extérieur (64), l'élément d'étanchéité (73) étant maintenu entre le cylindre intérieur (68) et le siège de ressort (75) qui est sollicité par le ressort de rappel (77) vers le cylindre intérieur (68).

18. Système selon la revendication 13, dans lequel le premier et le second cylindres extérieurs (64, 66) ont des parties d'extrémité (64a, 66a) ayant des contours semblables à ceux des sièges de ressort (44) disposés aux extrémités d'un ressort à boudin (42) du second mécanisme à ressort (40).

19. Système selon la revendication 10, comprenant en outre un second plateau de commande (110) pouvant tourner par rapport aux volants d'inertie du côté d'entraînement et du côté entraîné (10, 20) et par rapport au premier plateau de commande (100), et disposé entre le mécanisme d'amortissement hydraulique (60) et le mécanisme de frottement (130).

20. Système selon la revendication 19, dans lequel le second plateau de commande (110) comprend une paire de second éléments de plateau de commande (112), chacun des seconds éléments de commande (112) comportant une partie annulaire (112a) et des bras 112b s'étendant radialement vers l'extérieur de la partie annulaire (112a), la partie annulaire (112a) s'engageant par coulissement sur le mécanisme de frottement (130) et les bras (112b) s'engageant de façon amovible sur le mécanisme d'amortissement hydraulique (60).

21. Système selon la revendication 3, dans lequel le mécanisme de frottement (130) comprend:
    un plateau de poussée (132) pouvant tourner par rapport aux volants d'inertie du côté d'entraînement et du côté entraîné (10, 20);
    une garniture de poussée (134) constitué d'un matériau abrasif et couplée au plateau de poussée (132); et

un ressort conique (136) produisant axialement une force élastique lorsqu'il est déformé, dans lequel le plateau de poussée (132), la garniture de poussée (134) et le ressort conique (136) sont disposés entre une partie annulaire (112a) d'un plateau de commande (110) et une partie annulaire (24a) d'un plateau entraîné (24) du volant d'inertie du côté entraîné (20) de façon à ce que le ressort conique (136) provoque la production d'une force prédéterminée (Fr) par le mécanisme de frottement (130) lorsque le ressort conique (136) est comprimé.

22. Système selon la revendication 1, comprenant en outre un mécanisme amortisseur à air (80) disposé entre les volants d'inertie du côté d'entraînement et du côté entraîné (10, 20) et comportant au moins un amortisseur à air (82) définissant une chambre à air (84) dans celui-ci et ayant un orifice (86), le mécanisme amortisseur à air (80) comportant le second mécanisme à ressort (40) dont la force de ressort est produite par un coussin d'air de la chambre à air (84) d'au moins un amortisseur à air (82), et le mécanisme amortisseur à air dont la force d'amortissement est produite par l'écoulement d'air par l'orifice (86) d'au moins ledit amortisseur à air (82), la taille de l'orifice (86) étant telle que, lorsque l'amortisseur à air (82) effectue un mouvement alterné à vitesse élevée, l'air se trouvant dans la chambre à air (84) joue le rôle d'un ressort à coussin d'air ayant une constante de ressort élevée par comparaison à celle que l'on observe lorsque l'amortisseur à air (82) effectue un mouvement alterné à vitesse relativement faible.

23. Système selon la revendication 22, comprenant en outre un plateau de commande (120) pouvant tourner par rapport aux volants d'inertie du côté d'entraînement et du côté entraîné (10, 20);

un mécanisme de frottement (40) reliant le plateau de commande (120) et le volant d'inertie du côté entraîné (20);

et dans lequel le premier mécanisme à ressort (30) relie le volant d'inertie du côté d'entraînement (10) et le plateau de commande (120), et

le mécanisme amortisseur à air (80) relie le volant d'inertie du côté d'entraînement (10) et le plateau de commande (120).

24. Système selon l'une quelconque des revendications 22 et 23, dans lequel le volant d'inertie du côté d'entraînement (10) comporte:

une bague extérieure (12);

une bague intérieure (14) disposée radialement à l'intérieur de la bague extérieure (12); et des plateaux d'entraînement (16,18) disposés de part et d'autre de la bague extérieure (12) et fixés à la bague extérieure (12), la bague intérieure (14) étant fixée à l'un des plateaux d'entraînement (16).

25. Système selon la revendication 24, dans lequel chacun des plateaux d'entraînement (16,18) présente une première et une seconde ouvertures ou échancrures (17A, 17B, 19A, 19B, 17, 19) formées dans celui-ci, les extrémités circonférentielles des premières ouvertures ou échancrures (17A, 19A, 17, 19) s'engageant de façon amovible sur le mécanisme amortisseur à air (80).

26. Système selon l'une quelconque des revendications 22 et 23, dans lequel le volant d'inertie du côté entraîné (20) comprend un corps de volant d'inertie (22) et un plateau entraîné (24) fixé au corps de volant d'inertie (22).

27. Système selon la revendication 26, dans lequel le plateau entraîné (24) comprend une partie annulaire (24a) et des bras (24b) s'étendant radialement vers l'extérieur de la partie annulaire (24a), les bras (24b) s'engageant de façon amovible sur le mécanisme amortisseur à air (80).

28. Système selon l'une quelconque des revendications 22 et 23, dans lequel le premier mécanisme à ressort (30) comporte au moins un premier ressort à boudin (32), le premier ressort à boudin (32) étant logé dans la chambre à air (84) de l'amortisseur à air (82) et joue également le rôle de ressort de rappel de l'amortisseur à air (82).

29. Système selon l'une quelconque des revendications 22 et 23, dans lequel l'amortisseur à air (82) comprend:

un cylindre extérieur (88) comportant une partie d'extrémité (34a) et une partie cylindrique (88a);

un cylindre intérieur (90) coulissant axialement par rapport au cylindre extérieur (88) et définissant dans celui-ci la chambre à air (84) en association avec le cylindre extérieur (88), le cylindre intérieur (90) ayant une partie d'extrémité (34a) et une partie cylindrique (90a); et

une bague d'étanchéité (92) disposée entre la partie cylindrique (88a) du cylindre extérieur (88) et la partie cylindrique (90a) du cylindre intérieur (90).

**30.** Système selon la revendication 29, dans lequel le cylindre intérieur (90) présente une rainure (94) formée dans sa partie cylindrique (90a) qui s'étend circonférentiellement sur toute la circonférence de la partie cylindrique (90a) du cylindre intérieur (90), la bague d'étanchéité (92) étant ajustée dans la rainure (94).

**31.** Système selon la revendication 30, dans lequel la bague d'étanchéité (92) est comprimée de façon coulissante contre une surface intérieure de la partie cylindrique (88a) du cylindre extérieur (88) et est en contact lâche avec une surface extérieure de la partie cylindrique (90a) du cylindre intérieur (90).

**32.** Système selon la revendication 30, dans lequel un jeu (g) est présent entre la bague d'étanchéité (92) et au moins une surface latérale de la rainure (94).

**33.** Système selon la revendication 29, comprenant en outre:
un montant s'étendant axialement (96) formé dans au moins une partie d'extrémité (34a) du cylindre extérieur (88) et de la partie d'extrémité (34a) du cylindre intérieur (90); et
un butoir (98) constitué d'un matériau élastique et fixé à une extrémité du montant (96).

**34.** Système selon la revendication 29, dans lequel la partie d'extrémité (34a) du cylindre extérieur (88) et la partie d'extrémité (34a) du cylindre intérieur (90) constituent des sièges de ressort (34) devant être disposés aux extrémités d'un premier ressort à boudin (32) du premier mécanisme à ressort (30).

**35.** Système selon l'une quelconque des revendications 22 et 23, comprenant en outre un troisième mécanisme à ressort (50) disposé parallèlement au premier mécanisme à ressort (30) et parallèlement à la combinaison en série du second mécanisme à ressort (40) et du mécanisme amortisseur à air, le troisième mécanisme à ressort (50) reliant les volants d'inertie du côté d'entraînement et du côté entraîné (10, 20) avec un jeu prédéterminé ($\theta$1)entre ceux-ci.

**36.** Système selon la revendication 35, dans lequel le troisième mécanisme à ressort (50) comporte au moins un troisième ressort à boudin (52) et des sièges de ressort (54) disposés aux extrémités du troisième ressort à boudin (52), chacun de sièges de ressort (54) comportant une partie en résine synthétique dure (54a) et au moins l'un des sièges de ressort (54) disposés aux extrémités du troisième ressort à boudin (52) comportant un butoir élastique (54b) fixé à la partie en résine synthétique dure (54a) de façon à s'opposer à un siège de ressort opposé (54).

**37.** Système selon la revendication 35, dans lequel le volant d'inertie du côté d'entraînement (10) comporte:
une bague extérieure (12);
une bague intérieure (14) disposée radialement à l'intérieur de la bague extérieure (12); et
des plateaux d'entraînement (16, 18) disposés de part et d'autre de la bague extérieure (12) et fixés à la bague extérieure (12), la bague intérieure (14) étant fixée à l'un des plateaux d'entraînement (16), chacun des plateaux d'entraînement (16,18) ayant des ouvertures ou échancrures (17, 19) ménagées dans celui-ci et les extrémités circonférentielles des ouvertures ou échancrures (17, 19) s'engageant de façon amovible sur le mécanisme amortisseur à air (80) et le troisième mécanisme à ressort (50).

**38.** Système selon la revendication 35, dans lequel le volant d'inertie du côté entraîné (20) comprend un corps de volant d'inertie (22) et un plateau entraîné (24) fixé au corps de volant d'inertie (22), le plateau entraîné (20) comportant une partie annulaire (24a) et des bras (24b) s'étendant radialement vers l'extérieur de la partie annulaire (24a), les bras (24b) s'engageant de façon amovible sur le mécanisme amortisseur à air (80) et le troisième mécanisme à ressort (50).

**39.** Système selon la revendication 35, dans lequel trois amortisseurs à air (82) et trois ressorts à boudin (52) sont disposés les uns à la suite des autres dans la direction circonférentielle du dispositif à volant d'inertie.

**40.** Système selon la revendication 27, dans lequel le plateau entraîné (24) comporte une parie annulaire (24a) et des bras (24b) s'étendant radialement vers l'extérieur de la partie annulaire (24a), la partie annulaire (24a) étant en contact coulissant avec le mécanisme de frottement (140) et les bras (24b) s'engageant de façon amovible sur le mécanisme amortisseur à air (80).

**41.** Système selon la revendication 23, dans lequel le plateau de commande (120) comprend une paire d'éléments de plateau de commande (122) couplés l'un à l'autre, chacun des éléments de plateau de commande (122) comportant une partie annulaire (122a) et des bras (122b) s'étendant radialement vers l'extérieur de la partie annulaire (122a), les bras (122b) s'engageant de façon amovible sur le mécanisme amortisseur à air (80) et la partie annulaire (122a) s'engageant de façon amovible sur le mécanisme de frottement (140).

42. Système selon la revendication 23, dans lequel le mécanisme de frottement (140) comprend:

un plateau de poussée (142) pouvant tourner par rapport aux volants d'inertie du côté d'entraînement et du côté entraîné (10, 20) par rapport au plateau de commande (120);

une garniture de poussée (144) constituée d'un matériau abrasif et couplée au plateau de poussée (142); et

un ressort conique qui produit une force de poussée et définit une force frottement prédéterminée (Fr) du mécanisme de frottement (140), dans lequel le plateau de poussée (142), la garniture de poussée (144) et le ressort conique (146) sont interposés entre le plateau de commande (120) et le volant d'inertie du côté entraîné (20).

43. Système selon la revendication 35, dans lequel le volant d'inertie du côté entraîné (20) comprend un corps de volant d'inertie (22) et un plateau entraîné (24) fixé au corps de volant d'inertie (22), le plateau entraîné (24) comportant une partie annulaire (24a) et des bras (24b) s'étendant radialement vers l'extérieur de la partie annulaire (24a), les bras (24b) s'engageant de façon amovible sur le mécanisme amortisseur à air (80) et le troisième mécanisme à ressort (50) et la partie annulaire (24a) s'engageant de façon coulissante sur le mécanisme de frottement (140).

# FIG. I

# FIG. 2

# FIG. 3

# FIG. 6

# FIG. 4

# FIG. 5

# FIG. 7

EP 0 339 805 B1

# FIG. 8

31

FIG. 9

FIG. 12

# FIG. 10

# FIG. 11

EP 0 339 805 B1

# F I G. 13

34

EP 0 339 805 B1

# FIG. 14

# FIG. 15

# FIG. 19

35

FIG. 16A

FIG. 16B

# F I G. 17

# F I G. 18

# F I G. 20

# FIG. 21

# FIG. 22

# FIG. 24

EP 0 339 805 B1

# FIG. 23

K + K₁ + K₂

CUSHION
IS
DEFORMED

TORSIONAL
SPEED S=∞

TORSIONAL
SPEED S=0

K + K₁

K + K₂
HYSTERESIS

TORQUE (T) →

K    θ₁    θ₂

TORSIONAL
ANGLE (θ)

# FIG. 26

52    50

54    54a    54b    54b    54a    54

# FIG. 25

24b    24b    24
24a

24b    24b

24b    24b

40

FIG. 27

# FIG. 28

# FIG. 29

# FIG. 30

# FIG. 35

# FIG. 31

# FIG. 32

FIG. 33

FIG. 34